# EUROPEAN PATENT SPECIFICATION

(11) **EP 2 702 622 B1**
(45) Date of publication and mention of the grant of the patent: **27.04.2016**
(21) Application number: 12722966.4
(22) Date of filing: 27.04.2012
(51) Int. Cl.: H01M 10/04, H01M 4/80, H01M 2/22, H01M 2/26, H01M 4/74

(54) **STACKING AND SEALING CONFIGURATIONS FOR ENERGY STORAGE DEVICES**
STAPELUNGS- UND ABDICHTUNGSKONFIGURATIONEN FÜR ENERGIESPEICHERVORRICHTUNGEN
CONFIGURATIONS D'EMPILEMENT ET DE SCELLEMENT POUR DISPOSITIFS DE STOCKAGE D'ÉNERGIE

(30) Priority: 29.04.2011 US 201161481059 P; 29.04.2011 US 201161481067 P
(43) Date of publication of application: 05.03.2014
(73) Proprietor: G4 Synergetics, Inc., Roslyn, NY 11577 (US)
(72) Inventor: CLARK, Miles, Gainesville, FL 32601 (US); CHERISOL, Kenneth, Mount Laurel, NJ 08054 (US); REGALADO, Julius, Gainesville, FL 32601 (US); WEST, Jon, K., Gainesville, FL 32605 (US); ZHOU, Xin, Gainesville, FL 32605 (US); GORDON, Joshua, Ocala, FL 34471 (US); CITTA, Myles, High Springs, FL 32643 (US); CITTA, Nelson, Lake City, NV 32025 (US)
(74) Representative: Vossius & Partner Patentanwälte Rechtsanwälte mbB
(86) International application number: PCT/US2012/035652
(87) International publication number: WO 2012/149467

(56) References cited:
- WO-A2-03/094258
- US-A- 5 154 989
- US-A1- 2006 051 664
- US-A1- 2009 109 600
- US-A1- 2009 197 157

## Description

### Cross-Reference to Related Applications

This application claims the benefit of United States Provisional Application No. 61/481,059, filed April 29, 2011, and United States Provisional Application No. 61/481,067, filed April 29, 2011.

### Background

Energy storage device (ESD) capacity is a measure of the charge stored by the ESD and is a component of the maximum amount of energy that can be extracted from the ESD. An ESD's capacity may be related to the number of interfaces between the electrodes in the ESD. Techniques such as winding the electrodes and folding the electrodes may increase the number of interfaces between the electrodes. However, manufacturing of folded and wound electrodes is difficult because they require special techniques for manipulating the electrodes. Additionally, folded and wound electrodes are susceptible to defects because additional stresses may be present at the folds or bends of the electrodes when compared to flat electrodes.

### Summary

In view of the foregoing, apparatus and methods are provided for stacked energy devices (ESDs), including various stacking and sealing configurations for the stacked ESDs.

In accordance with some aspects of the disclosure, there is provided an ESD with a bipolar conductive substrate having a first side coupled to a first substack and a second side coupled to a second substack. The first and second substacks include a plurality of alternately stacked positive and negative monopolar electrode units, each respective monopolar electrode unit comprising a first active material electrode layer and a second active material electrode layer on opposing sides of a conductive pathway. A separator is provided between adjacent monopolar electrode units. The conductive pathways of the positive monopolar electrode units are electronically coupled to form a positive tabbed current bus, and the conductive pathways of the negative monopolar electrode units are electronically coupled to form a negative tabbed current bus. The negative tabbed current bus of the first substack is coupled to the first side of the bipolar conductive substrate and the positive tabbed current bus of the second substack is coupled to the second side of the bipolar conductive substrate.

In some embodiments, the conductive pathway comprises perforations. The perforations may be uniformly spaced apart from one another and the perforations may be uniformly sized. The first and second active material electrode layers may physically bind to one another through the perforations in the conductive pathway. In some embodiments, the surface area of the conductive pathway is equal to the area defined by the perforations.

In some embodiments, the first and second active material electrode layers comprise a metal foam having a respective active material deposited therein. In some embodiments, the first and second active material electrode layers comprise a respective active material bound to the conductive pathway using a binder.

In some embodiments, the conductive pathway comprises a plurality of conductive flanges. The positive tabbed current bus includes the plurality of conductive flanges of the positive monopolar electrode units, and the negative tabbed current bus includes the plurality of conductive flanges of the negative monopolar electrode units. The conductive flanges are folded to form the respective positive and negative tabbed current buses. The folded tabs may be aligned in a stacking direction, and the tabbed current buses may be parallel to the stacking direction.

In some embodiments, the positive and negative tabbed current buses comprise electronic connection tabs that protrude outwardly from the stacking direction at an end of the respective tabbed current bus. The electronic connection tabs of the first substack align with electronic tabs of the second substack about the bipolar conductive substrate, and the electronic connection tabs of the first and second substacks are electronically coupled to the bipolar conductive substrate and to one another. The electronic connection tabs may protrude parallel to the bipolar conductive substrate.

In some embodiments, the electronic connection tabs extend across a side of the substack and perpendicular to the stacking direction. In some embodiments, the first and second sides of the bipolar conductive substrate extend outwardly from the first and second substacks to form an outwardly extended portion, and the electronic connection tabs of the first and second substacks are coupled to the outwardly extended portion of the bipolar conductive substrate.

In some embodiments, the ESD comprises a hard stop that encircles the bipolar conductive substrate and couples the bipolar conductive substrate to the electronic connection tabs of the first and second substacks about the outwardly extended portion. The hard stop includes a peripheral groove in an outer rim of the hard stop for receiving a sealing ring. The sealing ring prevents an electrolyte from the first substack from combining with an electrolyte from the second substack. The hard stop may include a plurality of notches that align the electronic connection tabs of the first and second substacks to orient the electronic connection tabs with one another with respect to the bipolar conductive substrate.

In accordance with some aspects of the disclosure, there is provided a bipolar ESD that includes a bipolar electrode unit. The bipolar electrode unit includes a first substack of a plurality of alternating positive and negative monopolar electrode units, and each respective monopolar electrode unit comprises a first conductive pathway. The bipolar electrode unit also includes a second substack of a plurality of alternating positive and negative monopolar electrode units, and each respective monopolar electrode unit comprises a second conductive pathway. The bipolar electrode unit also includes a bipolar conductive substrate having a first side coupled to the first substack and a second side coupled to the second substack. In some embodiments, the bipolar conductive substrate is coupled to the first conductive pathways for the alternating negative monopolar electrode units of the first substack, and the bipolar conductive substrate is coupled to the second conductive pathways for the alternating positive monopolar electrode units of the second substack.

In accordance with some aspects of the disclosure, there is provided a substack for an ESD. The substack comprises a positive terminal monopolar electrode unit, a negative terminal monopolar electrode unit, and a plurality of alternating positive and negative monopolar electrode units stacked between the positive and negative terminal monopolar electrode units. Each respective monopolar electrode unit includes a first active material electrode layer and a second active material electrode layer on opposing sides of a conductive pathway. A separator is provided between adjacent monopolar electrode units. The substack is configured to couple with a bipolar conductive substrate via the positive or negative terminal monopolar electrode unit and the respective positive or negative conductive pathways of the alternating positive and negative monopolar electrode units. In some embodiments, the positive and negative terminal monopolar electrode units comprise a respective conductive pathway having an active material electrode layer on a side of the conductive pathway facing the alternating positive and negative monopolar electrode units.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIGS. 1A-B show illustrative monopolar electrode units or MPUs, in accordance with some implementations of the disclosure;
FIGS. 2A-D show illustrative conductive pathways or "electronic raceways," in accordance with some implementations of the disclosure;
FIG. 3 shows a partially-exploded view of an illustrative substack that includes multiple MPUs, in accordance with some implementations of the disclosure;
FIG. 4 shows an illustrative substack that includes multiple MPUs, in accordance with some implementations of the disclosure;
FIGS. 5A-B show cross-sectional views of an illustrative substack which includes multiple MPUs, in accordance with some implementations of the disclosure;
FIG. 6 shows an illustrative substack with tabbed current buses, in accordance with some implementations of the disclosure;
FIGS. 7A-B show cross-sectional views of an illustrative substack with tabbed current buses, in accordance with some implementations of the disclosure;
FIGS. 8A-C depict various techniques for electronically coupling conductive flanges, in accordance with some implementations of the disclosure;
FIG. 9 shows a partially exploded view of illustrative substacks and a bipolar conductive substrate, in accordance with some implementations of the disclosure;
FIG. 10 shows illustrative substacks with hard stops, in accordance with some implementations of the disclosure;
FIGS. 11A-B show perspective views of an illustrative hard stop, in accordance with some implementations of the disclosure;
FIG. 12 shows a cross-sectional view of illustrative substacks with hard stops, in accordance with some implementations of the disclosure;
FIG. 13 shows a partial cross-sectional perspective view of multiple substacks with hard stops placed into an ESD casing, in accordance with some implementations of the disclosure;
FIG. 14 shows illustrative equalization valves and fill tube ports provided on the hard stops, in accordance with some implementations of the disclosure;
FIG. 15 shows an illustrative technique for filling the substacks of the ESD with electrolyte, in accordance with some implementations of the disclosure;
FIG. 16 shows a perspective view of an illustrative rectangular substack, in accordance with some implementations of the disclosure;
FIGS. 17A-B show illustrative rectangular MPUs, in accordance with some implementations of the disclosure;
FIG. 18 shows a schematic view of an illustrative rectangular substack which includes multiple MPUs, in accordance with some implementations of the disclosure;
FIGS. 19A-B show cross-sectional views of an illustrative rectangular substack that includes multiple MPUs and tabbed current buses, in accordance with some implementations of the disclosure;
FIG. 20 shows a perspective view of illustrative rectangular MPUs stacked in a stacking direction, in accordance with some implementations of the disclosure;
FIG. 21 shows illustrative rectangular MPUs stacked in a stacking direction with hard stops, in accordance with some implementations of the disclosure;
FIGS. 22A-H depict various steps for assembling an ESD having multiple substacks, in accordance with some implementations of the disclosure;
FIGS. 23A-B show illustrative equalization valves and pressure relief valves in the ESD, in accordance with some implementations of the disclosure;
FIG. 24 shows illustrative thermoelectric generators for cooling the ESD, in accordance with some implementations of the disclosure; and
FIGS. 25A-B show schematic cross-sectional views of illustrative hard stops, in accordance with some implementations of the disclosure.

### Detailed Description

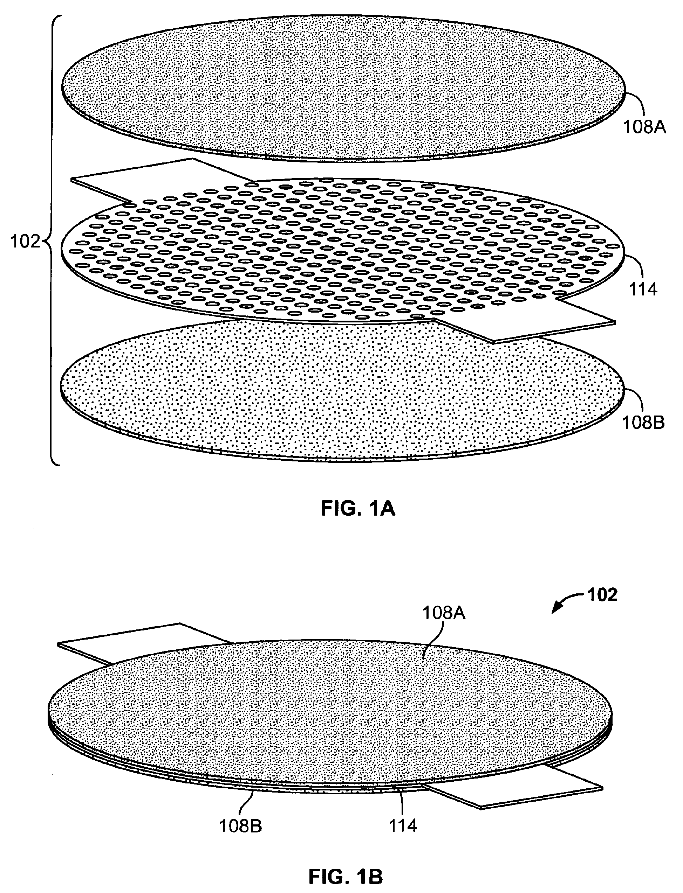

Apparatus and methods are provided for stacked energy storage devices (ESDs) including various stacking and sealing configurations for the ESDs, and are described below with reference to FIGS. 1-25. The present disclosure relates to ESDs including, for example, batteries, capacitors, any other suitable electrochemical energy or power storage devices which may store and/or provide electrical energy or current, or any combination thereof. It will be understood that while the present disclosure is described herein in the context of a stacked bipolar ESDs, the concepts discussed are applicable to any intercellular electrode configuration including, but not limited to, parallel plate, prismatic, folded, wound and/or bipolar configurations, any other suitable configuration, or any combinations thereof.

FIGS. 1A-B show illustrative monopolar electrode units or MPUs 102, in accordance with some implementations of the disclosure. As shown in FIG. 1A, an MPU 102 includes two active material electrode layers 108a-b that have the same polarity and are placed on opposite sides of a conductive pathway 114, also referred to herein as an "electronic raceway." The active material electrode layers 108a-b may be made by impregnating metal foam with either anode or cathode active materials so that the metal foam provides a conductive matrix for the active material. For example, FIG. 1B shows an MPU with two active material electrode layers 108a-b that may be formed of two metal foams both coated with the same active material and placed on opposite sides of a conductive pathway 114. In some embodiments, the active material electrode layers 108a-b may be pressed so that the two layers interlock with one another via the conductive pathway 114. The conductive pathway 114 is sandwiched between the two active metal electrode layers 108a-b.

The anode or cathode active materials may be of the same material or different materials having the same polarity. The type of active material used determines the polarity of the MPU. For example, anode active materials may be used in negative MPUs and cathode active materials may be used in positive MPUs. In certain implementations, the anode or cathode active material may be coated onto the conductive pathway 114. For example, depending on the type of material used as the active material and the type of material used for the conductive pathway 114, an appropriate binder material may be used to hold the active materials onto the conductive pathway 114.

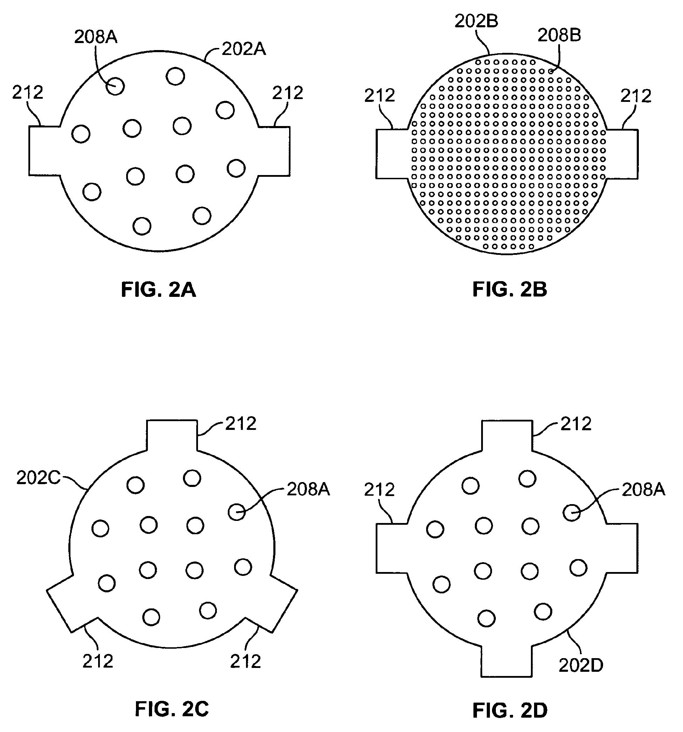

FIGS. 2A-D show illustrative conductive pathways 202a-d, or "electronic raceways," in accordance with some implementations of the disclosure. The conductive pathway 202a-d is a conductive substrate that acts as a current path delivery structure. As shown in FIGS. 2A-D, the conductive pathways 202a-d contain perforations 208a-b that allow the active material electrode layers, such as 108a-b, to physically interlock and bind together through the conductive pathway 202a-d. The perforations 208a-b on the conductive pathway 202a-d may also aid in the ionic and electronic conductivity of an MPU, such as MPU 114, which may include a conductive pathway 114 similar to conductive pathways 202a-d.

The design of the conductive pathway 202a-d preferably balances ionic conductivity, electronic conductivity, and thermal conductivity needs. An ideal conductive pathway 202a-d would have complete ionic transmission and unlimited current carrying ability. However, these two objectives are balanced in that ionic conductivity is generally related to the size and number of perforations 208a-b on the conductive pathway 202a-d, while electronic conductivity is generally related to the total surface area of the conductive pathway 202a-d (i.e., not including the perforations 208a-b). The perforation pattern of a particular conductive pathway 202a-d may be tailored to favor ionic conductivity, for example, by increasing the open area of the perforation pattern, which may be better suited for low powered ESDs. Likewise, the perforation pattern of a particular conductive pathway 202a-d may be tailored to favor electronic conductivity, for example, by increasing the amount of metal available for current carrying and heat dissipation, which may be better suited for high powered ESDs. An ESD's power is related to chemical (ionic) and electrical (electronic) kinetics, which are balanced based on the type of ESD desired.

In certain implementations, as shown in FIGS. 2A-B, the perforations 208a-b may have different sizes and/or the number of perforations may vary. For example, FIG. 2A shows a conductive pathway 202a with a plurality of circular perforations 208a. FIG. 2B shows a conductive pathway 202b with circular perforations 208b having a relatively smaller radius than the perforations 208a of conductive pathway 202a, but the number of 208b perforations 208b is relatively greater. The perforation patterns may be uniformly distributed, in that the perforations 208a-b are uniformly spaced from one another, which may allow substantially uniform ionic conductivity and electronic conductivity throughout the conductive pathways 202a-b. Any suitable configuration of perforations may be used with respect to conductive pathways 202a-d, and the perforations may have any suitable shape, including rectangular, circular, elliptical, triangular, hexagonal, or any other desired shape, or any combination thereof. In certain implementations, the area of the perforations is substantially equal to the surface area of the conductive pathway 202a-d, which may provide a preferred balance between ionic conductivity and current carrying conductivity.

In some embodiments, conductive flanges 212 may be provided about the conductive pathway 202a-d and may protrude radially outwardly from the conductive pathway 202a-d. Conductive flanges 212 provide an electrical connection to the MPU as the conductive flanges 212 are extensions of conductive pathway 202a-d. In some embodiments, the flanges are integrally formed with a respective conductive pathway. In some embodiments, the flanges are separately formed and then coupled to a respective conductive pathway. Conductive flanges 212 may have any suitable shape or size, while configured to extend outwardly from the conductive pathway 202a-d. For example, the cross-sectional area of the conductive flange 212 may be substantially rectangular, triangular, circular or elliptical, hexagonal, or any other desired shape or combination thereof.

As shown in FIGS. 2C-D, for example, the number of conductive flanges 212 may vary. In FIG. 2C, three conductive flanges 212 protrude radially outwardly from the conductive pathway 202c, whereas in FIG. 2D there are four conductive flanges 212 that protrude radially outwardly from the conductive pathway 202d. It will be understood that the conductive pathways 202a-d may have any suitable number of conductive flanges 212. Increasing the number of flanges may increase the electrical conductivity, because more electrical connections to the MPU 102 are available, effectively reducing the overall resistance of connections to the MPU. The thickness of the conductive pathways 202a-d may be determined based on a desired resistance. Because increasing the number of flanges 212 reduces the overall resistance, thinner conductive pathways 202a-d may be used.

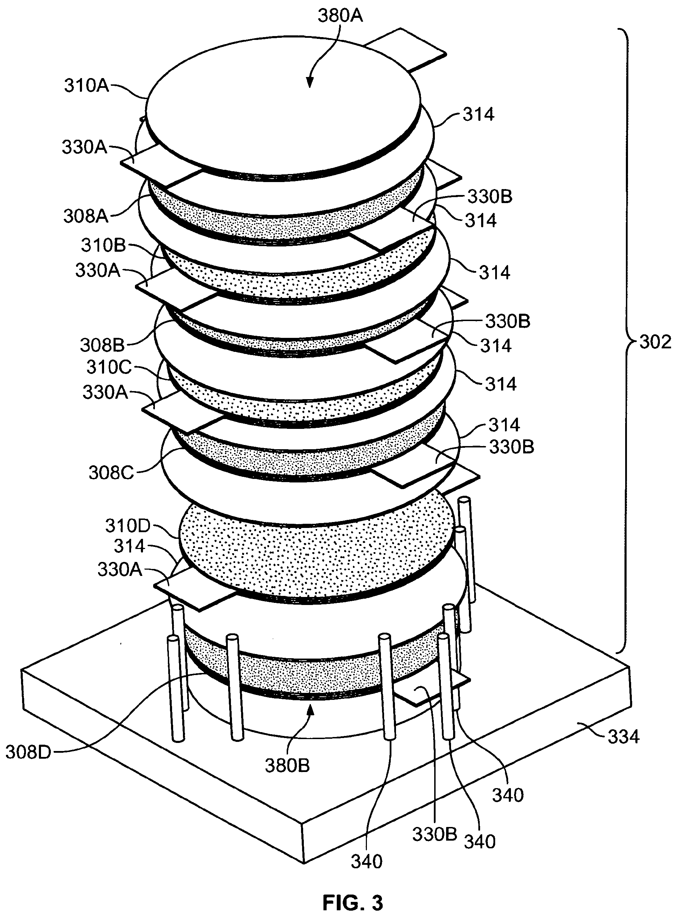

FIG. 3 shows a partially-exploded view of an illustrative substack 302 that includes multiple MPUs 308a-d and 310a-d, in accordance with some implementations of the disclosure. As shown in FIG. 3, for example, multiple MPUs 308a-d and 310a-d may be stacked substantially vertically in a stacking direction to form a substack 302. The MPUs in the stack may have properties similar to those of MPU 102 of FIGS. 1A-B, which includes conductive pathways 114. A separator 314 may be provided between adjacent MPUs (e.g., MPUs 308a and 310b), such that the active material electrode layer of one MPU 308a may be opposed to the active material electrode layer of an adjacent MPU 310b via the separator 314. Additionally, the polarity of the active materials on MPUs 308a is different than the polarity of the active material on MPUs 308b. To increase the substack's 302 energy storing capacity, or to increase the surface area/capacity ratio, multiple MPUs may be stacked on top of one another.

Each separator 314 may include an electrolyte layer that may hold an electrolyte. The electrolyte layer may electrically separate the active material electrode layers of adjacent MPUs having different polarities, which may prevent electrical shorting between the adjacent MPUs (e.g., MPUs 308a and 310b), while allowing ionic transfer between the MPUs. The conductive flanges 330a-b of the conductive pathways of the same polarity may be aligned, so that the conductive flanges 330b of MPUs 308a-d are aligned directly over each other. Similarly, the conductive flanges 330a of MPUs 310a-d may be aligned. The conductive flanges 330a-b may be aligned so the distance between conductive flanges 330a-b of different polarities are substantially equally spaced.

With continued reference to the substack 302 of stacked MPUs 310a-d and 308a-d of FIG. 3, MPUs within a substack may be stacked with separators 314 separating adjacent MPUs. For example, MPUs 310a-d and MPUs 308a-d are separated from one another by separators 314. Similar to MPU 102 of FIG. 1B, the MPUs 308a-d and 310a-d include two active material electrode layers with the same polarity on opposite sides of a conductive pathway. In some embodiments, however, as shown in FIG. 3, the MPU 310a at one end of the substack does not have an active material coated on the outer-facing electrode layer 380a of MPU 310a. Additionally, the MPU 308d at the other end of the substack may not have an active material coated on the outer-facing electrode layer 380b of the MPU 308d. The electrode layers of the MPUs (e.g., MPUs 310a and 308d) not coated with active material may include the metal foam on the electrode layer. Alternatively, in certain implementations, the outer facing electrode layers 380a-b of the MPUs 310a and 308d at either end of the substack may have an active material coated thereon. The polarity of the MPUs 310a-d and 308a-d, which are stacked one after another, alternate. An MPU at one end of the substack (e.g., MPU 308d) has a different polarity (e.g., based on the active material electrode layers) than an MPU at the other end of the substack (e.g., MPU 310a).

The substack 302 may be constructed using a jig 334 having alignment rails 340 to align the conductive flanges 330a-b of MPUs 310a-d and 308a-d of the same polarity (e.g., conductive flanges 330a of MPUs 310a-d are aligned together, and conductive flanges 330 of MPUs 308a-d are aligned together). For example, as shown in FIG. 3, the conductive pathways in each MPU 310a-d and 308a-d have two conductive flanges 330a-b protruding radially outwardly on opposite sides of the respective conductive pathway. The conductive flanges 330a-b, which correspond to MPUs of the same polarity (either MPUs 310a-d or MPUs 308a-d), are aligned over each other. The conductive flanges 330a-b are placed such that the MPUs 310a-d and 308a-d and the conductive flanges 330a-b are within their respective alignment rails 340.

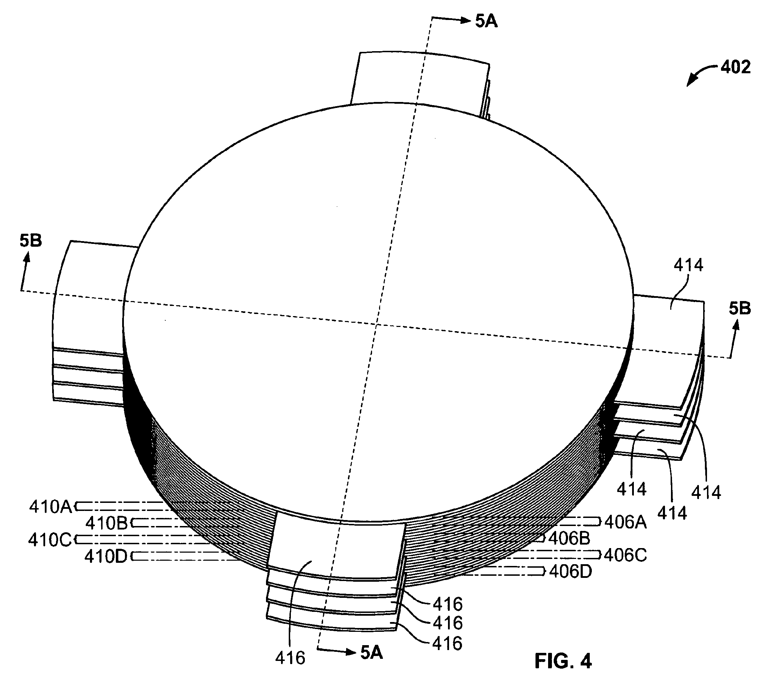

FIG. 4 shows an illustrative substack 402 that includes multiple MPUs 406 and 410, in accordance with some implementations of the disclosure. The substack 402 is shown having four MPUs 410 of one polarity and four MPUs 406 of an opposite polarity. Line V denotes the cross-sectional area of the substack 402, which includes the conductive flanges 414 of MPUs 406 of the substack 402. Live IV denotes the cross-sectional area of the substack 402, which includes the conductive flanges 416 of MPUs 410 of the substack 402.

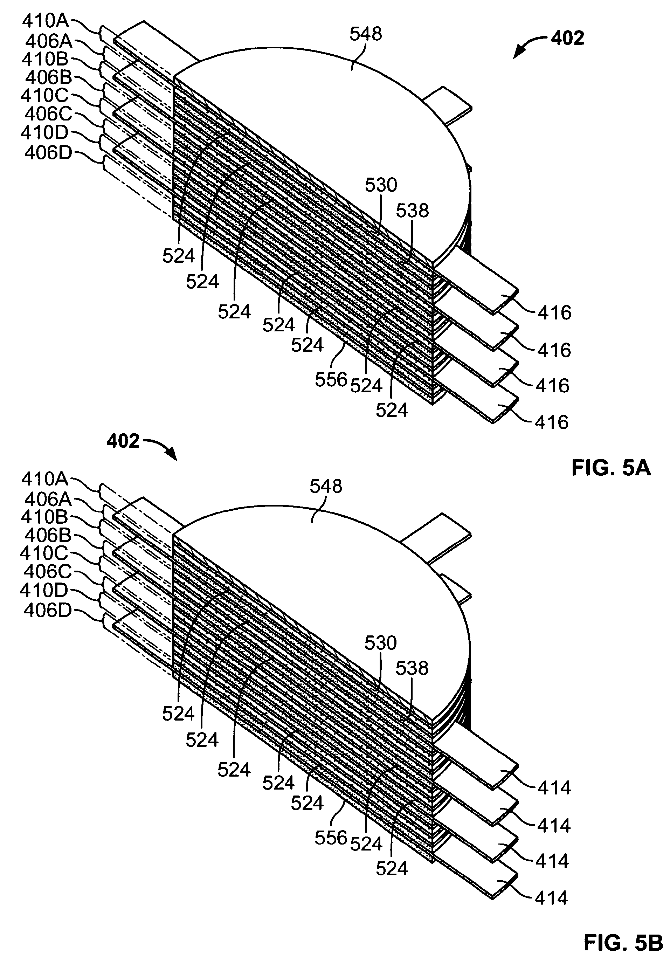

FIGS. 5A-B show various cross-sectional views of the substack 402, including multiple MPUs 406a-d and 410a-d, in accordance with some implementations of the disclosure. The substack 402 includes four MPUs 410a-d and four MPUs 406a-d, with the MPU 410a at one end of the substack 402 having a different polarity than the MPU 516d at the other end of the substack 402. Adjacent MPUs having active material electrode layers with opposite polarities (e.g., 530 and 538) are separated by separators 524.

In each of the cross sectional views in FIGS. 5A-B, conductive flanges are shown protruding from the alternating MPUs. FIG. 5A shows conductive flanges 416 protruding from MPUs 410a-d, of one polarity, starting at one end of the substack 402, where alternating MPUs have conductive flanges protruding outwards.
Similarly, FIG. 5B shows conductive flanges 414 protruding from MPUs 406a-d, with an opposite polarity than MPUs 410a-d, starting at the other end of the substack 402. As discussed above, the electrode layers 548 and 556 at the ends of MPUs 410a and 406d, respectively, may not have an active material coated thereon. Alternatively, in certain implementations, the electrode layers 548 and 556 may have respective active materials coated thereon.

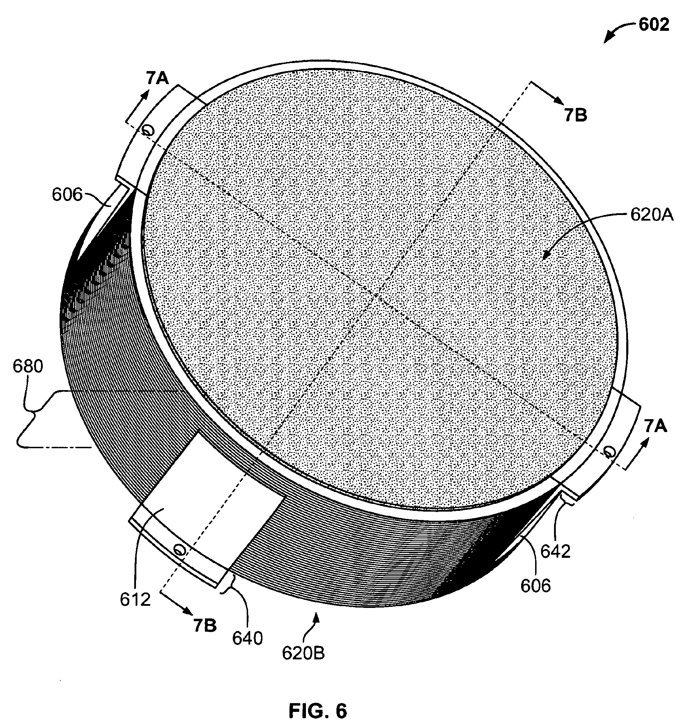

FIG. 6 shows an illustrative substack 602 with tabbed current buses 606 and 612, in accordance with some implementations of the disclosure. The conductive flanges of MPUs of the same polarity (e.g., the conductive flanges 416 of MPUs 410a-d, or the conductive flanges 414 of MPUs 406a-d of a different polarity) are electronically coupled together to form a tabbed current bus 606 and 612. For example, conductive flanges are folded to form the respective positive and negative tabbed current buses 606 and 612. The tabbed current buses 606 and 612 provide a conductive structure that may be electrically coupled to tabbed current buses from other substacks, for example, to couple the substacks together. Because each MPU may have multiple conductive flanges (e.g., the conductive flanges described with respect to conductive pathway 202c-d), there may be multiple tabbed current buses 606 or 612 for each set of conductive flanges. The conductive flanges of one or more conductive pathways may be electronically coupled together to form a tabbed current bus 606 and 612 by folding, crimping, welding, soldering, bonding, riveting, bolting, any other suitable means of providing electrical coupling, or any combination thereof.

As shown in FIG. 6, each tabbed current bus 606 or 612 may be provided at the ends 620a, 620b of the substack 602, where a portion 640 and 642 of the tabbed current bus 606 or 612, also referred to herein as an "electronic connection tab," protrudes outwardly from the substack 602. The tabbed current buses 606 of one polarity protrude outwardly from one end 620a of the substack 602, and the tabbed current buses 612 of the opposite polarity protrude outwardly from the other end 620b of the substack 602. The tabbed current buses 606 and 612 may be folded such that they are aligned in a stacking direction and parallel to the stacking direction. The electronic connection tabs 640 and 642 may extend across a side (e.g., side 680) of the substack 602 and be perpendicular to the stacking direction.

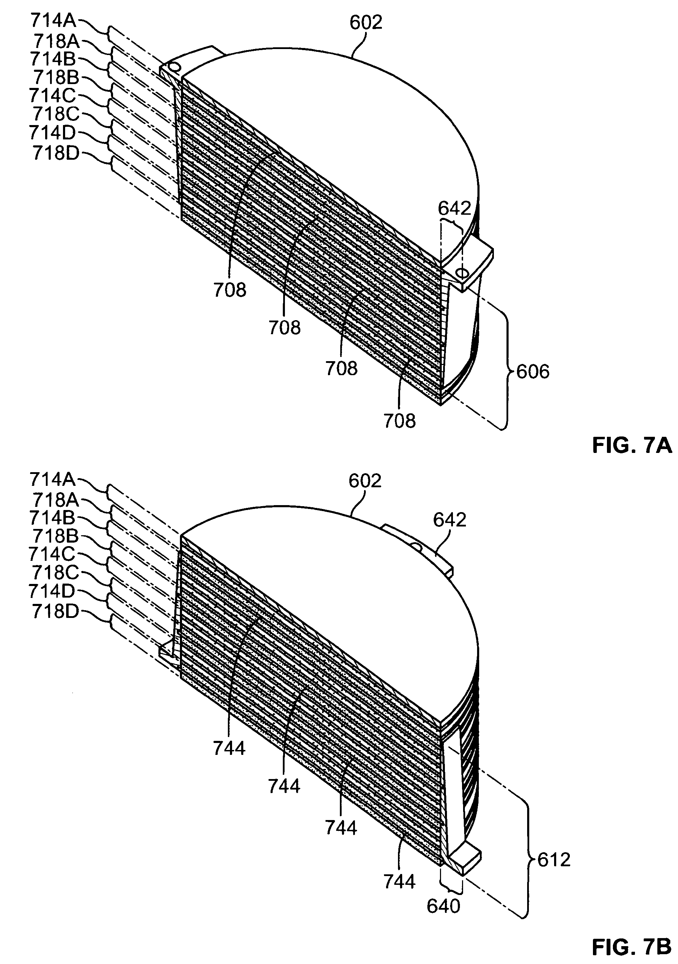

FIGS. 7A-B show cross-sectional views of an illustrative substack 602 with tabbed current buses 606 and 612, in accordance with some implementations of the disclosure. FIG. 7A shows the cross sectional area of substack 602 denoted by Line VII of FIG. 6. The conductive flanges 708 of MPUs 714a-d are folded to one end of the substack and coupled together to form a tabbed current bus 606. An electronic connection tab 642, which is part of the tabbed current bus 606, protrudes radially outwardly from the top end 620a of the substack 602. FIG. 7B shows the cross sectional area of substack 602 denoted by Line VIII of FIG. 6. The conductive flanges 744 of MPUs 718a-d are folded to a second end of the substack and coupled together to form a tabbed current bus 612. An electronic connection tab 640, which is part of the tabbed current bus 612, protrudes radially outwardly from the bottom end 620b of the substack 602.

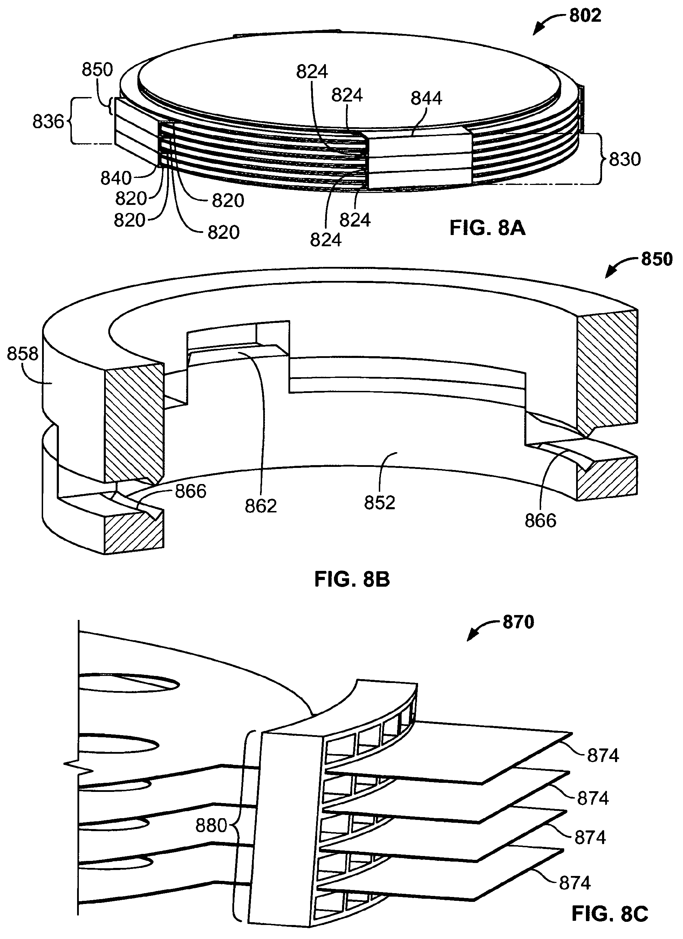

FIGS. 8A-C depict various techniques for electronically coupling conductive flanges, in accordance with some implementations of the disclosure. FIG. 8A shows the conductive flanges of each polarity (e.g., conductive flanges 824 of one polarity and conductive flanges 820 of a different polarity) folded vertically to couple them together. The conductive flanges may be folded, pressed together, or welded to form the tabbed current bus 830 or 836 in any suitable way. The conductive flanges of MPUs of the same polarity 824 or 820, which are aligned on top of each other, are electronically coupled together and an electronic connection tab may be provided at the respective end of the substack 802. In some implementations, a conductive member 848 may be placed between the conductive flanges, and welded to the conductive flanges, to electrically couple the conductive flanges of the same polarity together.

FIG. 8B shows a crimping apparatus 850 which may be used electronically couple the conductive flanges of a substack (e.g., conductive flanges 414 or 416 of substack 402 of FIG. 4) to form a tabbed current bus (e.g., tabbed current bus 606 or 612). A substack may be placed in the crimping apparatus 850, such that when the top half 858 of the crimping apparatus 850 is closed and brought together with the lower half 852 of the crimping apparatus 850, the conductive flanges of the same polarity are crimped together. The conductive flanges of MPUs of one polarity are crimped in crimping grooves 866 in a first direction while the conductive flanges of MPUs of the opposite polarity are crimped in crimping grooves 862 in a second direction. As an example, by using the crimping apparatus 850, substack 402 may be crimped to look like substack 602, with current tabbed buses 606 and 612 folded and protruding from different ends of substack 602.

FIG. 8C shows an electronically conductive clip 870 that may be used to electronically couple conductive flanges 874 (e.g., conductive flanges 414 or 416 of substack 402) together to form a tabbed current bus (e.g., tabbed current bus 606 or 612). A set of conductive flanges 874 for MPUs of the same polarity (e.g., conductive flanges 414 or 416 of substack 402) are inserted into the electronically conductive clip 870, and then the clip 870 is compressed to provide an electronic connection at the respective ends of the substack 602. The conductive clip 870 provides alignment of the conductive flanges 874 before they are folded and compressed into a tabbed current bus, and optionally an electronic connection tab. The conductive clip 870 has a waffle-like structure, which allows for relatively easy compression of the conductive clip 870, while still providing sufficient structure for the conductive flanges 874 to be aligned and held in place during compression. However, the conductive clip 870 may have any suitable structure that allows the conductive clip 870 to be compressed and thereby form a tabbed current bus.

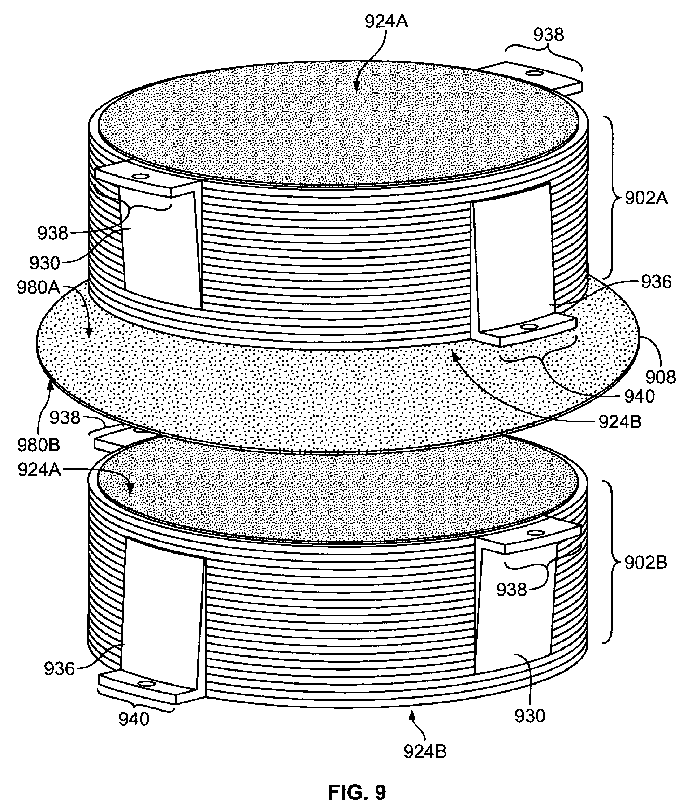

FIG. 9 shows a partially-exploded view of illustrative substacks 902a-b and a bipolar conductive substrate 908, in accordance with some implementations of the disclosure. Two substacks 902a and 902b are shown with a bipolar conductive substrate placed therebetween. Substacks 902a and 902b include elements similar to substack 602, which includes MPUs, such as MPUs 714a-d and 718a-d, tabbed current buses 606 and 612, and electronic connection tabs 640 and 642. The tabbed current buses 930 and 936 of each substack are shown folded to different ends of the substack, with protruding electronic connection tabs 938 and 940 at respective ends thereof. The tabbed current buses 930 and 936 of each substack may be folded such that they are parallel to the stacking direction of the substack.

Between the substacks 902a-b is a bipolar conductive substrate 908. In certain implementations, the bipolar conductive substrate 908 may be an uncoated metal surface, which forms an electrical connection between the tabbed current buses at the ends of adjacent substacks (e.g., the second end 924b of the substack 902a and the first end 924a of the substack 902b). The bipolar conductive substrate 908 is substantially impermeable and prevents electrolyte ion transfer between the substacks 902a-b. The area of the bipolar conductive substrate 908 covers the respective end of the substacks 902a-b and overlaps the electronic connection tabs 940 and 930 which protrude from the substacks 902a-b. The electronic connection tabs 940 and 930 may be coupled to the outwardly extended portions of the bipolar conductive substrate 908, which overlaps the electronic connection tabs 940 and 930.
In certain implementations, the bipolar conductive substrate 908 may extend further than the electronic connection tabs 940 and 930.

As an example, the bipolar conductive substrate 908 may be circular in geometry, with a radius substantially equal to the radius of the substacks 902a-b and the electronic connection tabs 938 and 940, which protrude from the substacks 902a-b. In certain embodiments, the radius of the bipolar conductive substrate 908 may be relatively greater than the radius of the substacks 902a-b, including the electronic connection tab 938 and 940. This additional length may ensure that the bipolar conductive substrate 908 extends beyond the electronic connection tabs 938 and 940. This overlap may help the substrate 908 to prevent the transfer of electrolyte between substrates. Although shown as having a substantially cylindrical geometry, the bipolar conductive substrate 908 may have any suitable geometry that covers the respective ends 924a and 924b of the substacks 902a-b, and when placed into an ESD casing, prevents electrolyte from moving between adjacent substacks (e.g., prevents electrolyte from substack 902a from leaking into substack 902b, and vice versa).

As shown in FIG. 9, substack 902a is aligned over substack 902b. The electronic connection tabs 940 at the second end 924b of substack 902a, which are coupled to the conductive pathways of MPUs of one polarity, are aligned with the electronic connection tabs 930 at the first end 924a of the substack 902b, which are coupled to the conductive pathways of MPUs of an opposite polarity. The bipolar conductive substrate 908 is disposed between the two substacks 902a-b and between the electronic connection tabs 930 and 940. Each substack 902a-b is aligned so the electronic connection tabs 940 about one end 924b of a substack 902a connected to the conductive pathways of a certain polarity are aligned with the electronic connection tabs 930 about the opposing end 924a of another substack 902b connected to the conductive pathways of an opposite polarity.

As an example, the second end 924b of substack 902a and the first end 924a of substack 902b are coupled to a first 980a and second side 980b of the bipolar conductive substrate 908. Each substack includes a plurality of alternately stacked positive and negative MPUs, with separators therebetween. The conductive pathways of the positive MPUs of each substack may have multiple conductive flanges. The conductive flanges of each positive MPU are aligned with the conductive flanges of other positive MPUs.
The conductive flanges that are aligned over each other may be coupled (e.g., folded) to form positive tabbed current buses 930 with electronic connection tabs 938, which may be part of or coupled to the tabbed current buses, protruding outwardly from the end of the positive tabbed current buses 930. The positive tabbed current buses 930 are folded to one end 924a of each substack. Similarly, the conductive pathways of the negative MPUs of each substack may have multiple conductive flanges, which are coupled (e.g., folded) like the positive MPUs. The negative tabbed current buses 936 and negative electronic connection tabs 940 coupled to the negative MPUs are folded to an opposite end 924b from the tabbed current buses 930 of the positive MPUs of each substack. The negative electronic connection tabs 940, and by extension the negative tabbed current buses 936, are coupled to one side 980a of the bipolar conductive substrate 908, and the positive electronic connection tabs 938, and by extension the positive tabbed current buses 930, are coupled to the other side 980b of the bipolar conductive substrate 908.

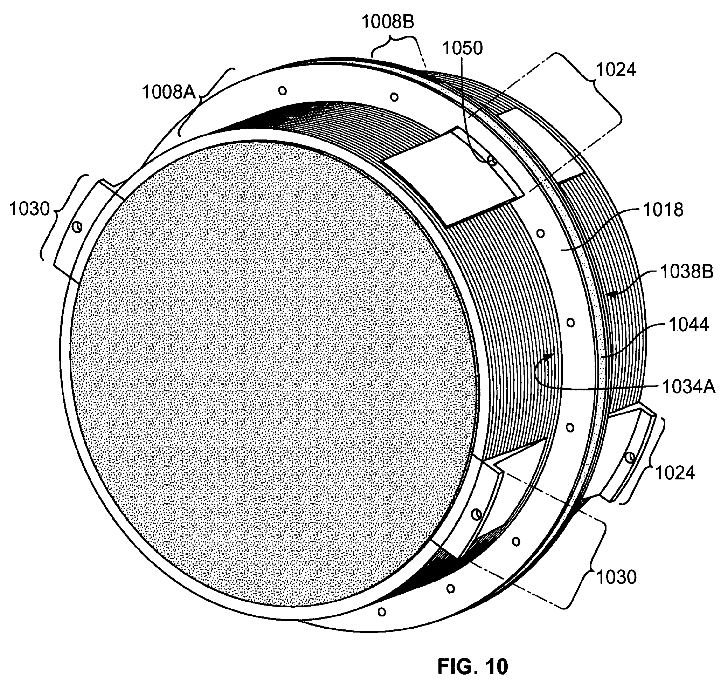

FIG. 10 shows illustrative substacks 1008a-b having hard stops 1018, in accordance with some implementations of the disclosure. Two substacks 1008a-b are shown in FIG. 10, with a bipolar conductive substrate, which is not visible, disposed between the two substacks 1008a-b. Substacks 1008a-b are stacked in a direction that is perpendicular to the plane defined by the MPUs within the substacks 1008a-b. Surrounding the two substacks 1008a-b are hard stops 1018, which help to hold the two substacks 1008a-b together and provide enhanced contact between electronic connection tabs of adjacent substacks 1008a and 1008b (e.g., electronic connection tabs 1024 may have an enhanced contact 1050 with electronic connection tabs 1030). The enhanced contact 1050 creates a relatively higher conductive connection between the electronic connection tabs (e.g., tabs 1024 and 1030). For example, an enhanced contact 1050 may be created by connecting the substacks 1008a-b through the conductive substrate, so that the electronic connection tabs 1024 of one polarity from the substack 1008a are directly electrically linked to the electronic connection tabs 1030 of the opposite polarity from an adjacent substack 1008b. The direct electric link may be achieved using welds, bolts, screws, rivets, or any other means of electrically linking the electronic connection tabs 1024 and 1030 of adjacent substacks 1008a-b, or any combination thereof. The electronic link provides a parallel path for electrons between the two electronic connection tabs 1024 and 1030 and is similar to the direct electrical link of a bipolar battery configuration, since the MPUs of one polarity are linked to the MPUs of the opposite polarity via the bipolar conductive substrate.

In order to prevent electrolyte of one substack 1008a from combining with the electrolyte of another substack 1008b, hard stops 1018 may be provided around the ends 1034a-b of adjacent substacks 1008a-b and the bipolar conductive substrate (not visible in FIG. 10) between the two adjacent substacks 1008a-b. The hard stops 1018 may substantially seal electrolyte within its particular substack (e.g., the electrolyte within 1008A or within 1008B).

The hard stops 1018 may include sealing rings 1044 about a periphery of the hard stops 1018 to provide a sealing barrier between the substacks 1008a-b, which substantially prevent electrolyte from combining with the electrolyte of adjacent substacks 1008a-b. The sealing rings 1044 create a seal between the walls of the ESD casing and the hard stop 1018.

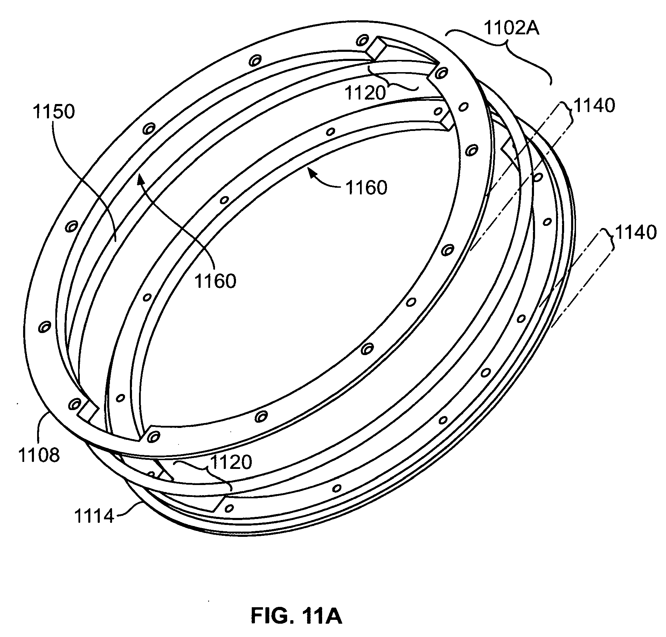

FIGS. 11A-B show perspective views of an illustrative hard stop 1102a-b, in accordance with some implementations of the disclosure. In FIG. 11A, the hard stop 1102a includes a first continuous section 1108 and second continuous section 1114. The first 1108 and second 1114 sections have notches 1120 in the shape of the electronic connection tabs (e.g., electronic connection tabs 1024 and 1030 of substacks 1008a-b of FIG. 10) to which they are configured to interface. This allows the hard stop 1102a to be placed around a substack, such as 1008a-b, during construction of the ESD. The notches 1120 allow the hard stops 1102a to be placed over the adjacent ends of adjacent substacks (e.g., ends 1034a and 1034b of substacks 1008a and 1008b) because the notches 1120 are in the shape of the electronic connection tabs (e.g., 1024 and 1030), which otherwise may interfere with the placement of the hard stop 1102a over the ends of the substacks. The first continuous section 1108 and second continuous section 1114 are clamped together on a respective side of a bipolar conductive substrate. The first and second sections 1108 and 1114 may be secured together through the bipolar conductive substrate by bolting, welding, or any other suitable technique for securely fastening the sections together, or any combination thereof. The outer rim 1140 of the hard stop 1102a may be grooved to allow a sealing ring 1150 to be placed in the groove. The first section 1108 and second section 1114 may be reciprocally grooved to allow a sealing ring 1150 to be fitted between the sections of the hard stop 1102a. In certain implementations, each section 1108 and 1114 of the hard stop 1102a may include a groove to fit its own sealing ring 1150. For example, each hard stop section 1108 and 1114 may have its own respective sealing ring 1150 on each of the outer rims 1140 of hard stop sections 1108 and 1114.

In certain implementations, the hard stop 1102a may include a shelf on the inner rim 1160 of the hard stop 1102a, on the side of the hard stop 1018 which faces the bipolar conductive substrate. The shelf may align the hard stop 1102a with the substacks by fitting around the bipolar conductive substrate between the substacks.

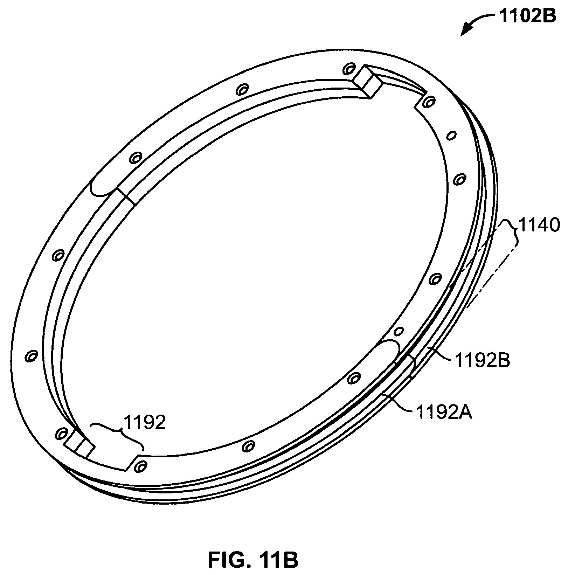

In FIG. 11B, the hard stop 1102b may be separated into multiple disjoint segments, instead of continuous sections. Hard stop 1102b is broken up into multiple segments, for example, hard stop segments 1192a and 1192b, which when joined together form a continuous hard stop 1102b. The hard stop segments 1192a-b are securely joined together, which creates a seal preventing electrolyte of adjacent substacks from combining. The segments may be secured together by bolting, welding, or any means of securely fastening the sections together. Hard stop 1102b may be divided into any number of segments which clasp together to form a continuous hard stop. The hard stop 1102b may include notches 1192 in the shape of electronic connection tabs which surround the electronic connection tabs (e.g., in the shape of electronic connection tabs 1024 and 1030). The outer rim of each segment 1192a-b of the hard stop 1102b may be grooved to allow a sealing ring to be placed in the groove. Multiple grooves may be made to allow for multiple sealing rings to be fitted on the outer rim of the hard stop 1102b. Though the shape of the hard stop, as shown in FIG. 11B, is circular with segments, the hard stop 1102b may be in any shape, such as rectangular, triangular, or elliptical, and the hard stop 1102b may be divided into multiple segments.

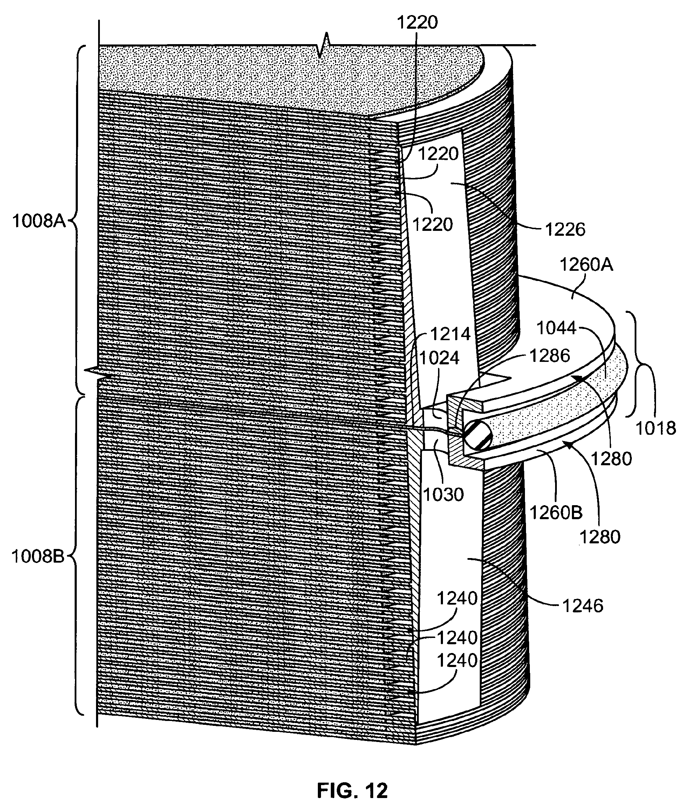

FIG. 12 shows a cross-sectional view of illustrative adjacent substacks 1008a-b with hard stops 1018, in accordance with some implementations of the disclosure. As described above with respect to FIG. 10, one end of the first substack 1008a and an opposing end of a second substack 1008b are placed adjacent each other, with a bipolar conductive substrate 1214 placed in between the two substacks. The conductive flanges 1220 of the conductive pathways of MPUs of the same polarity of the substack 1008a are shown combined together and folded to form a tabbed current bus 1226. The tabbed current bus 1226 of the first substack 1008a along with a protruding electronic connection tab 1030 are shown coupled to one side 1236a of the bipolar conductive substrate 1214. The conductive flanges 1240 of the conductive pathways of MPUs having opposite polarity from those connected to conductive flanges 1220 of the second substack 1008b are shown combined together and folded to form a tabbed current bus 1246. The tabbed current bus 1246 of substack 1008b along with a protruding electronic connection tab 1024 are shown coupled to the other side 1236b of the bipolar conductive substrate 1214. Encircling the substacks 1008a-b is hard stop 1018. The hard stop 1018 includes an upper hard stop section 1260a and a lower hard stop section 1260b. The hard stop sections 1260a-b are coupled to opposite sides of the bipolar conductive substrate 1214. The sections of the hard stop 1260a-b that face the bipolar conductive substrate 1214 overlap the segment 1286 of the bipolar conductive substrate 1214 which extends past the electronic connection tabs 1024 and 1030. The outer rim 1280 of the hard stop sections has a grooved section allowing for a sealing ring 1044 to be fitted therein.

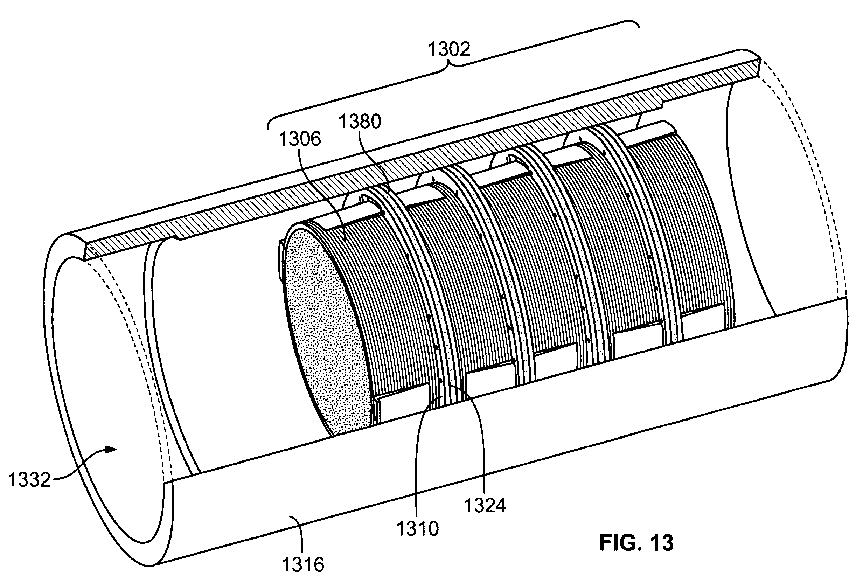

FIG. 13 shows a perspective view of multiple substacks 1306, in a stack 1302 having hard stops 1310 and placed into an ESD casing 1316, in accordance with some implementations of the disclosure. Multiple substacks 1306 are shown coupled together between respective bipolar conductive substrates with multiple hard stops 1310 encircling the bipolar conductive substrates creating a stack 1302. Substacks 1306 are stacked in a direction perpendicular to the plane defined by the MPUs within the substacks 1306. The outer rim 1380 of each hard stop 1310 includes a sealing ring 1324, which creates a seal between the walls 1332 of the ESD casing 1316 and the hard stops 1310, containing the electrolyte of a substack 1306 within its substack 1306, and prevents the electrolyte from combining with other substacks 1306.

In some implementations, hard stops 1324 may be provided at the ends of stack 1302. Hard stops 1324, at the ends of stack 1302, provide a seal for the electrolyte of substacks 1306 at the ends of stack 1302 and prevent the electrolyte from leaking out of the ESD casing.

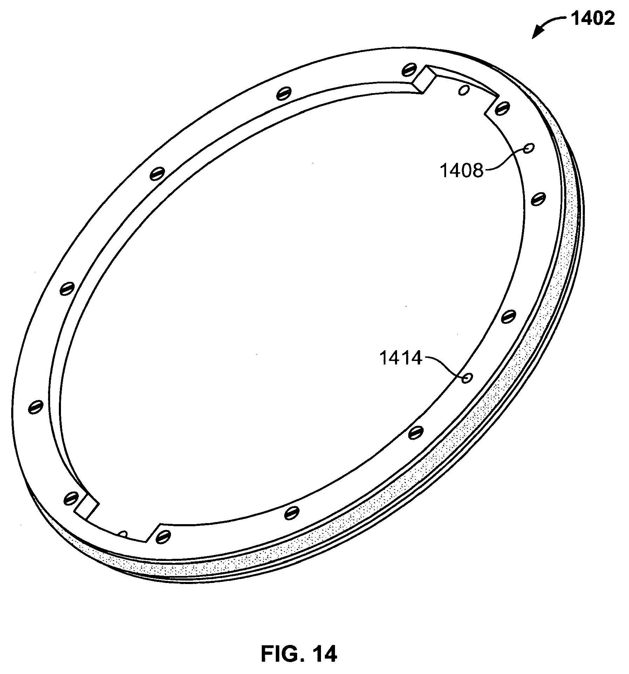

FIG. 14 shows equalization valves 1408 and fill tube ports 1414 provided on a hard stop 1402, in accordance with some implementations of the disclosure. By sealing substacks (e.g., substacks 1306) to prevent electrolyte of a first substack from combining with the electrolyte of another substack, a pressure differential may arise between adjacent substacks as the substacks are charged and discharged. Equalization valves 1408 may be provided on the hard stops 1402 to decrease the pressure differences thus arising. Equalization valves 1408 may operate as a semipermeable membrane to chemically allow the transfer of a gas and to substantially prevent the transfer of electrolyte. Equalization valves 1408 may be a mechanical arrangement of a sealing material (e.g., rubber) backed by a rigid material (e.g., steel) that is compressed against an opening in the hard stop 1402 using a spring, or sometimes a compressible rubber slug. When the pressure inside a substack (e.g., substack 1306) increases beyond acceptable limits, the spring compresses and the rubber seal is pushed away from the opening and the excess gas escapes. Once the pressure is reduced the equalization valve 1408 then reseals and the substack is able to function normally.

An equalization valve 1408 substantially prevents the transport of polar liquids, but may allow diatomic gases and non-reactive or noble gases to diffuse through the valve 1408 to equalize pressure on both sides of the valve 1408. The liquids that are blocked from diffusion or transport may include but are not limited to water, alcohol, salt solutions, basic solutions, acidic solutions, and polar solvents. An equalization valve 1408 may be used to separate diatomic gases from polar liquids. An equalization valve 1408 made from a polar solvent resistant sealant and a bundle of graphitic carbon fiber may also be used. The equalization valve 1408 may be used to equalize the pressure between substacks in a multiple substack ESD.

Fill tube ports 1414 are provided on the hard stops 1402 to aid with filling the sealed substacks (e.g., substacks 1306) after they have been placed into an ESD casing (e.g., casing 1316). As shown in FIG. 14, a fill tube port 1414 is provided on each of the hard stops 1402. The fill tube port 1414 prevents gas and liquid from passing therethrough. A filling tube or syringe may be inserted through the fill tube port 1414 of the hard stops 1402 adjacent each substack to fill the substacks with electrolyte. In this way, the filling tube or syringe may be placed through a plurality of hard stops to a bottom cell section of the stack, and then the stack may be filled with electrolyte from the bottom-up, withdrawing the filling tube or syringe as each section of the stack is filled with electrolyte.

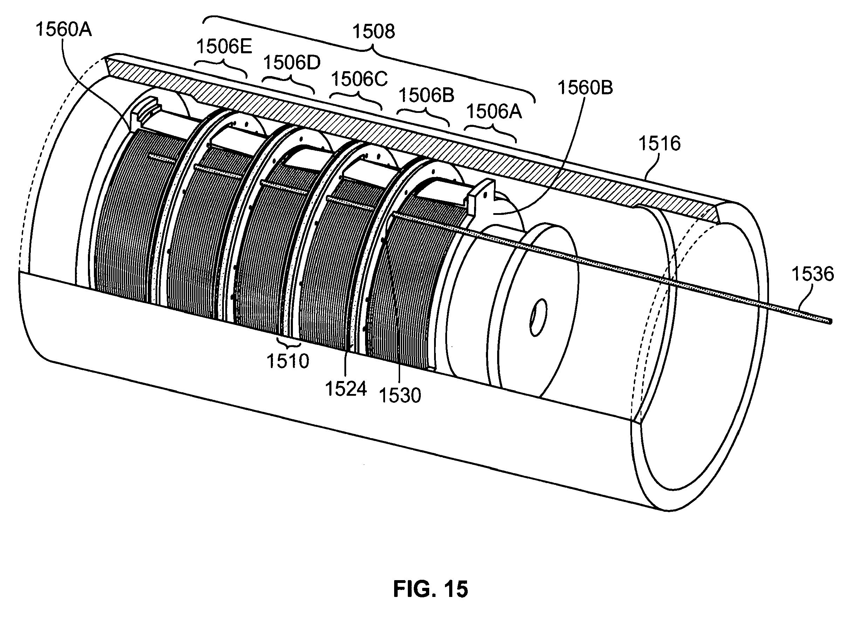

FIG. 15 shows an illustrative technique for filling the substacks 1506a-e of the ESD with electrolyte, in accordance with some implementations of the disclosure. The substacks 1506a-e together form a stack 1508 as they are placed into the ESD casing 1516. The stack 1508 includes hard stops 1510 and sealing rings 1524, which together may substantially seal each respective substack 1506a-e, thereby preventing electrolyte from combining between adjacent substacks (e.g., substacks 1506a and 1506b). Fill tube ports 1530 provided on each hard stop 1510 are aligned such that a fill tube or filling syringe 1536 may enter through the fill tube port 1530 of the first substack 1506a at one end of stack 1508 and travel through the fill tube ports 1530 of intermediate substacks 1506b-d until reaching substack 1506e at the other end of stack 1508. Once at substack 1506e, the fill tube 1536 may fill the end substack 1506e with electrolyte. Once the end substack 1506e is filled, the fill tube 1536 may be pulled up to the adjacent substack 1506d. Once the fill tube 1536 is pulled out of the end substack 1506e, the electrolyte in the end substack 1506e is sealed therein because the fill tube port 1530 prevents gases and liquids from entering or exiting the port. Each substack 1506a-e may be filled one-by-one from the end substack 1506e to the first substack 1506a (although the substacks may be filled in any other suitable order). If a substack 1506a-e needs additional electrolyte, the fill tube 1536 may be placed through the fill tube ports 1530 until reaching the particular substack 1506a-e needing the electrolyte, and that substack may be individually filled with electrolyte. Though an ordering of filling substacks 1506a-e with electrolyte is described, any order of filling the substacks 1506a-e with electrolyte may be performed.

In certain implementations, a collector-plates 1560a-b may be placed at the ends of stack 1508, with hard stops 1324 encircling the ends of the collector-plate, sealing the electrolyte of the substacks 1306 at the ends of the stack 1302.

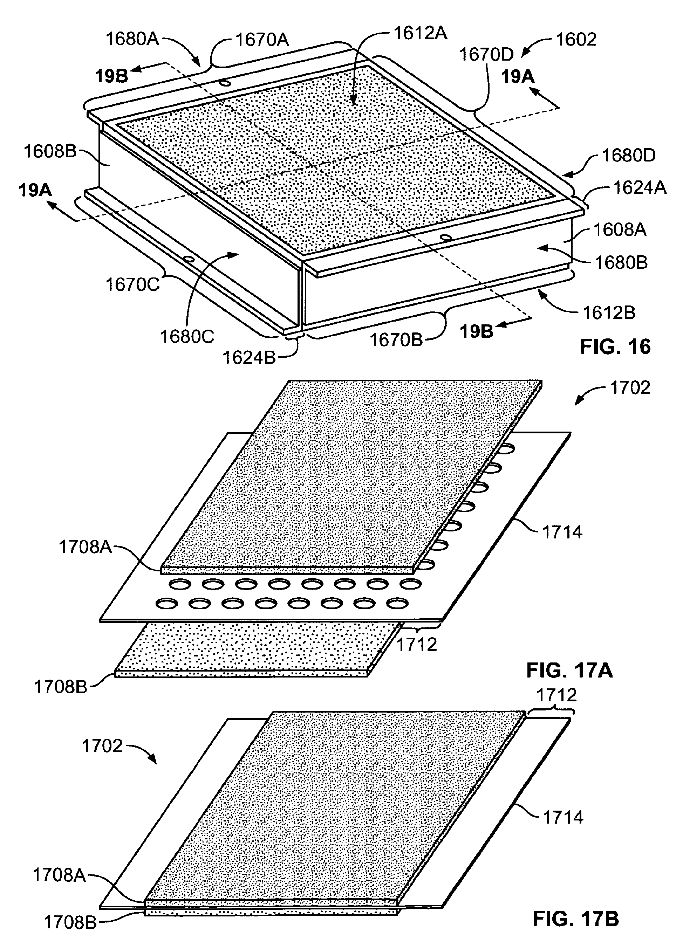

FIG. 16 shows a perspective view of an illustrative rectangular substack 1602, in accordance with some implementations of the disclosure. The rectangular substack 1602 has tabbed current buses 1608a-b on the first face 1612a and second face 1612b of the substack 1602. The width 1670a-d of the tabbed current buses 1608a-b extends across the sides 1680a-d of the substack 1602 along the respective face of the substack 1602 to which that current bus aligns. Conductive flanges of conductive pathways of MPUs of the same polarity are combined together and folded toward the first face 1612a to form upper tabbed current buses 1608a on opposing sides of the substack. Conductive flanges of conductive pathways of the MPUs of the opposite polarity are combined together and folded toward the second face 1612b to form lower tabbed current buses 1608b on opposing sides of the substack 1602. Each of tabbed current buses 1608a-b has electronic connection tabs 1624a-b protruding parallel to the face to which the tabbed current buses 1608a-b are folded. The electronic connection tabs 1624a-b overhang from the sides of the substack 1602.

FIGS. 17A-B show illustrative rectangular MPU 1702, in accordance with some implementations of the disclosure. MPU 1702 may used, for example, to build the rectangular substack 1602 of FIG. 16. As shown in FIG. 17A, an MPU 1702 includes two active material electrode layers 1708a-b that have the same polarity and are placed on opposite sides of a conductive pathway 1714. The active material electrode layers 1708a-b may be made by impregnating metal foam with either anode or cathode active materials so that the metal foam 1720 provides a conductive matrix for the active material. For example, as shown in FIG. 17B, the active material electrode layers 1708a-b may be formed using two metal foam sections, both coated with the same active material, and placed on opposite sides of a conductive pathway 1714. In some embodiments, the active material electrode layers 1708a-b may be pressed so that the two layers interlock with one another via the conductive pathway 1714. The conductive pathway 1714 is sandwiched between the two active material electrode layers 1708a-b. The conductive pathway 1714 has substantially the same width or length as the electrode layers but extends over the electrode layers of the other dimensions (e.g., as shown bipolar conductive substrate 1714 is wider than the electrode layer but is the same length). The segment of the conductive pathway 1714 which extends over the electrode layer is the conductive flange 1712.

The anode or cathode active materials may be of the same material or different materials having the same polarity. The type of active material used determines the polarity of the MPU 1702. For example, anode active materials may be used in negative MPUs and cathode active materials may be used in positive MPUs. In certain implementations, the anode or cathode active material may be coated onto the conductive pathway 1714. For example, depending on the type of material used as the active material and the type of material used for the conductive pathway 1714, an appropriate binder material may be used to hold the active materials onto the conductive pathway 1714.

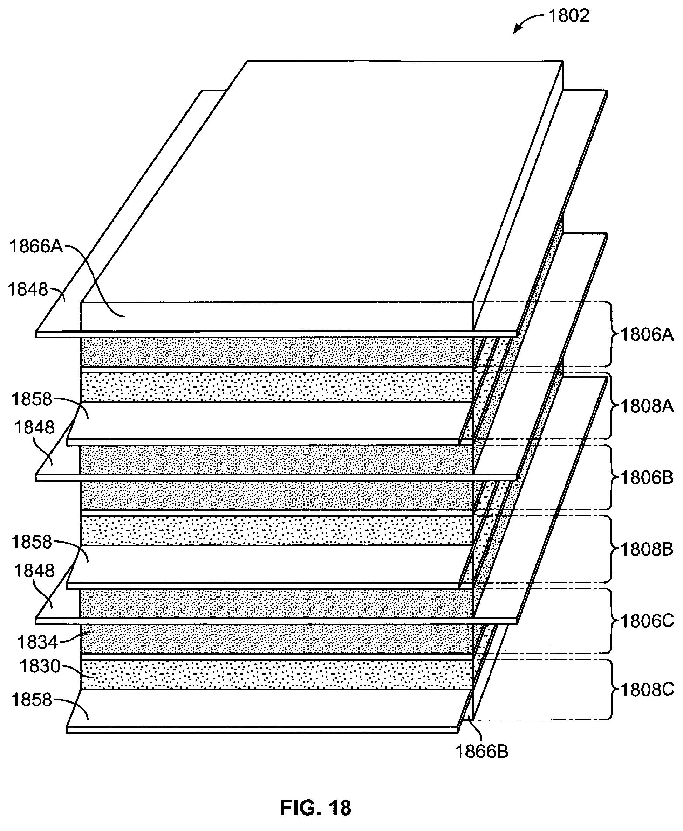

FIG. 18 shows a schematic view of an illustrative rectangular substack 1802 that includes multiple MPUs 1806a-c and 1808a-c in accordance with some implementations of the disclosure. Multiple rectangular MPUs 1806a-c and 1808a-c may be stacked substantially vertically in a stacking direction to form a substack 1802, with each MPU stacked having alternating polarities. For example, MPU 1806a and MPU 1808a have opposite polarities and are stacked with separator 1824 therebetween. Stacked adjacent to MPU 1808a may be MPU 1806b having the same polarity as MPU 1806a, and so forth, as adjacent MPUs are stacked with alternating polarities. The energy storing capacity of the substack 1802, or the surface area/capacity ratio of the substack, may be increased by stacking additional MPUs together.

Each separator 1824 may include an electrolyte layer that may hold an electrolyte. The electrolyte layer may electrically separate the active material electrode layers of adjacent MPUs having different polarities (e.g., positive and negative active material electrode layers 1830 and 1834), which may prevent electrical shorting between the adjacent MPUs (e.g., MPUs 1806c and 1808c), while allowing ionic transfer between the MPUs.

The conductive flanges (e.g., conductive flanges 1848 or 1858) of the conductive pathways of the same polarity may be aligned, so that the conductive flanges 1858 of MPUs 1808a-c with the same polarity are aligned with each other. Similarly, the conductive flanges 1848 of MPUs 1806a-b of a different polarity than MPUs 1808a-c may be aligned with each other. As shown in FIG. 18, because each of the conductive flanges 1848 and 1858 extend across an entire side of the MPU and also protrude from the side of the MPU, the MPUs of the same polarity are positioned such that the sides with the conductive flanges are aligned over each other. For example, conductive flanges 1848 are aligned over each other, and similarly conductive flanges 1858 are also aligned over each other. The stacking configuration alternates for each of the multiple MPUs, as shown in FIG. 18, where a first MPU 1806a of one polarity is stacked adjacent MPU 1808a of a different polarity, and are stacked such that conductive flanges 1848 of MPU 1806a are perpendicular to conductive flanges 1858 of MPU 1808a. Stacking continues in this manner with each MPU stacked with alternating polarity until the final substack is stacked with a different polarity than the first MPU 1806a.

In certain implementations, the MPU 1806a at one end of substack 1802 does not have an active material coated on the outer-facing electrode layer 1866a. Additionally, the MPU 1808c at the other end of substack 1802 may not have an active material coated onto the outer-facing electrode layer 1866b. The electrode layer 1866a of MPU 1806a of the substack 1802 may be a metal foam that is not coated with an active material. Similarly, electrode layer 1866b of the MPU 1808c of the substack 1802 may be a metal foam that is not coated with an active material.

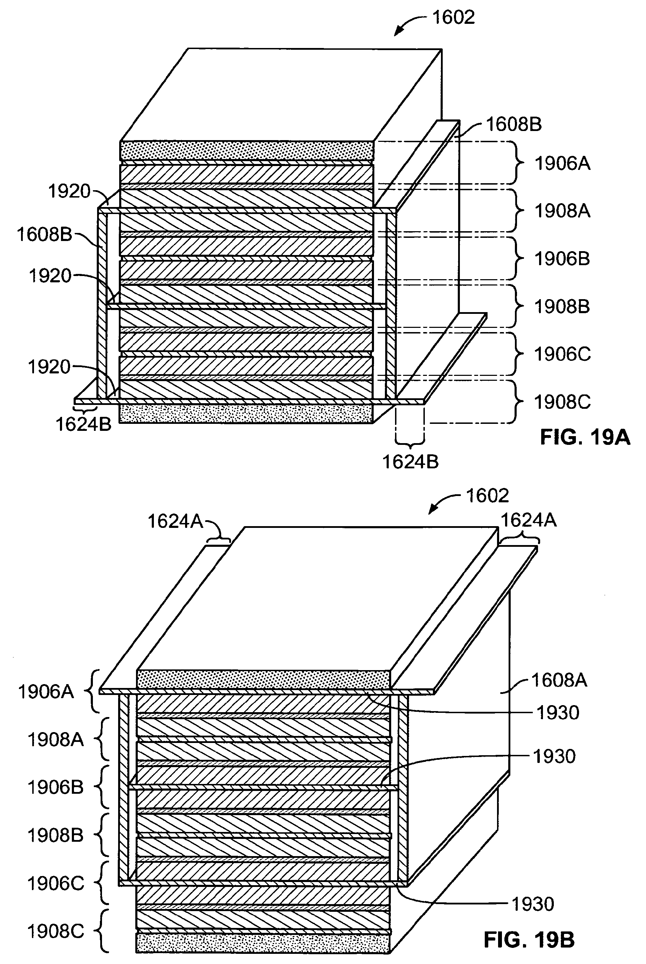

FIGS. 19A-B show cross-sectional views of an illustrative rectangular substack 1602 that includes multiple MPUs 1906a-c and 1908a-c and tabbed current buses 1608a-b, in accordance with some implementations of the disclosure. The conductive flanges 1930 and 1920 of MPUs of the same polarity are electronically coupled together to form tabbed current buses 1608a-b. Electronic connection tabs 1624a-b, which are coupled to the tabbed current buses 1608a-b, protrude outwards from the sides of the MPUs. The electronic connection tabs 1624a-b, and the tabbed current buses 1608a-b, provide a conductive electronic link that may electrically couple the tabbed current buses of other substacks together. The conductive flanges of one or more conductive pathways may be electronically coupled together to form a tabbed current bus by folding, crimping, welding, soldering, bonding, riveting, bolting, any other suitable means of providing electrical coupling, or any combination thereof.

FIG. 19A shows a cross-sectional view of an illustrative rectangular substack 1602 denoted by Line X in FIG. 16. The cross-section shows the conductive flanges 1920 of each MPU 1908a-c of one polarity, folded to one end of the substack 1602 and coupled together to form a tabbed current bus 1608b. Tabbed current buses 1608b are on two opposing sides 1680c-d of the substack 1602. The conductive flanges 1920, and the tabbed current bus 1608b, extend the width of the side 1680c-d of the substack 1602 and are folded towards the end of the substack 1602.

FIG. 19B shows a cross-sectional view of an illustrative rectangular substack 1602 denoted by Line XI in FIG. 16. The cross-section shows the conductive flanges 1930 of each MPU 1906a-c of a different polarity than that of MPUs 1908a, folded to a different end of the substack than tabbed current buses 1608a, and are coupled together to form tabbed current buses 1608b. Tabbed current buses 1608b coupled to the conductive flanges 1930 of the MPUs 1906a-c are on two opposing sides 1680a-b of the substack 1602, which are different than the sides which the tabbed current buses 1608a are coupled to. The conductive flanges 1930, and the tabbed current bus 1608a, extend the width of the side 1680a-b of the substack 1602 and are folded towards the other end of substack 1602.

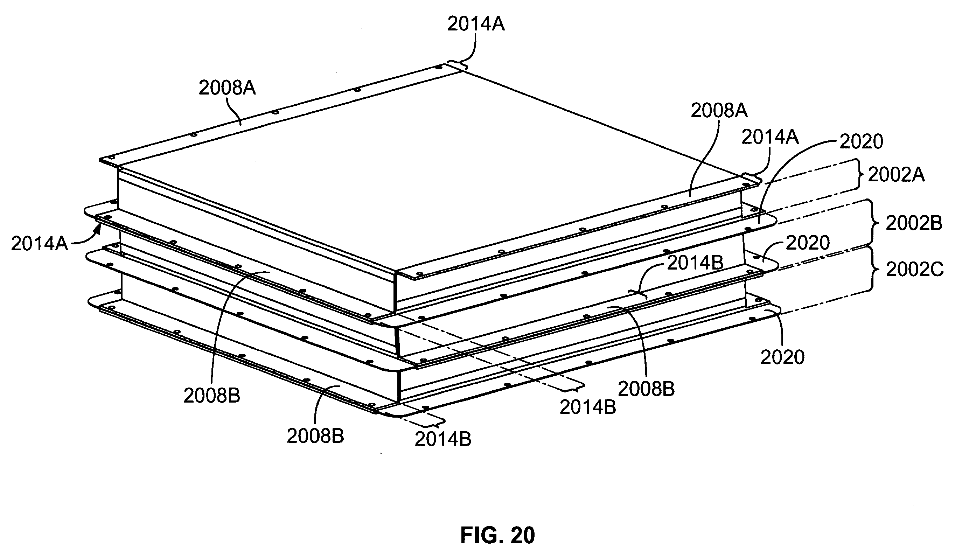

FIG. 20 shows a partially-exploded view of illustrative rectangular substacks 2002a-c, stacked in a stacking direction, in accordance with some implementations of the disclosure. The substacks 2002a-c have a plurality of alternating positive and negative MPUs stacked together, where the MPUs on either end of the substacks have different polarities. The tabbed current buses 2008a or 2008b, which extend across the sides of the substack 2002a-c, are coupled to the conductive flanges of the conductive pathways of MPUs having the same polarity, and are shown folded towards the first end of the substacks 2002a-c with an electronic connection tab 2014a protruding outwardly from the first end of the substacks 2002a-c. The tabbed current buses 2008b coupled to the conductive flanges of the conductive pathways of the MPUs having a different polarity extend on different sides of the substack 2002a-c from the tabbed current buses 2008a. The tabbed current buses 2008b are shown folded toward the second end of the substacks 2002a-c with an electronic connection tab 2014b protruding outwardly from the second end of the substacks 2002a-c.

Between the substacks 2002a-c are bipolar conductive substrates 2020. In certain implementations, bipolar conductive substrates 2020 may comprise an uncoated metal surface, which forms an electrical connection between the ends of adjacent substacks (e.g., the adjacent ends of substacks 2002a and 2002b). Bipolar conductive substrates 2020 are substantially impermeable and prevent electrolyte ion transfer between the substacks 2002a-c. The area of the bipolar conductive substrates 2020 covers the respective sides of the substacks 2002a-c and overlaps the electronic connection tabs 2014a-b, which protrude from the substacks 2002a-c. As shown in FIG. 20, the bipolar conductive substrates 2020 are rectangular in geometry. The area of the bipolar conductive substrate 2020 covers the length of the protruding electronic connection tabs 2014a-b on the sides of the substacks 2002a-c. For example, the bipolar conductive substrate 2020 between substack 2002a and substack 2002b extends a substantially equal distance as the electronic current tabs 2014b at the bottom of substack 2002a and the electronic current tabs 2014a at the top of substack 2002b. The bipolar conductive substrate 2020 also extends outwardly a substantially equal distance as the electronic current tabs 2014a on the top of substack 2002a and the electronic current tabs 2014b on the bottom of substack 2002b. By extending a substantially equal distance as the electronic current tabs not coupled to the bipolar conductive substrate 2020, a hard stop may be made to fit around the bipolar conductive substrates 2020 and electronic current tabs 2014a-b of the substacks 2002a-c. Though the edges of the bipolar conductive substrate 2020, as shown in FIG. 18, are rounded, the edges of the bipolar conductive substrate 2020 may be shaped in other ways, such as a pointed, slanted, or diagonal edge. The bipolar conductive substrates 2020 may also extend beyond the electronic current tabs 2014a-b. This overlap may help the biopolar conductive substrates 2020 to prevent the transfer of electrolyte between substrates.

As shown in FIG. 20, substack 2002a is aligned over substack 2002b, such that the electronic connection tabs 2014b at the bottom side of the substack 2002a, which are coupled to the conductive pathways of MPUs of one polarity, are aligned with the electronic connection tabs 2014a at the top side of the substack 2002b, which are coupled to the conductive pathways of MPUs of a different polarity. The bipolar conductive substrate 2020 is disposed between the two substacks 2002a-b and between the electronic connection tabs 2014b and 2014a. Each substack 2002a-c is aligned so the electronic connection tabs 2014b about one end of a substack connected to the conductive pathways of a certain polarity are aligned with the electronic connection tabs 2014a about the opposing end of another substack connected to the conductive pathways of an opposite polarity. For example, when the multiple substacks 2002a-c are stacked in a stacking direction, each substack 2002a-c may be rotated 90-degrees in relation to adjacent substacks (e.g., 2002a and 2002b). This may ensure that the electronic current tabs connected to opposing polarity of MPUs (e.g., electronic current tab 2014b of the top substack 2002a and electronic current tab 2014a of the middle substack 2002b) are adjacent and overlap each other through the bipolar conductive substrate 2020. Although three substacks 2002a-c are shown, it will be understood that any suitable number of substacks may be provided having bipolar conductive substrates therebetween.

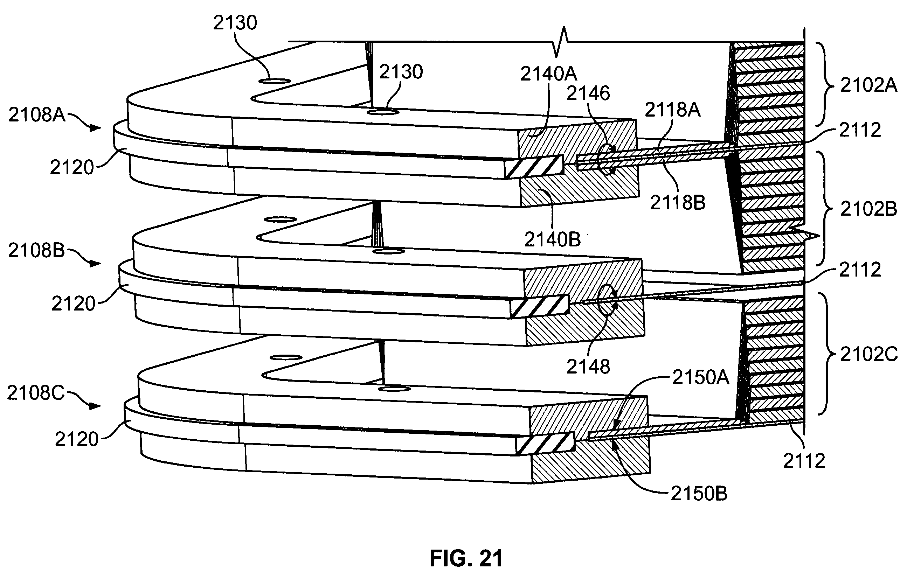

FIG. 21 shows illustrative rectangular substacks 2102a-c stacked in a stacking direction with hard stops 2108a-c in accordance with some implementations of the disclosure. Multiple substacks 2102a-c are shown stacked in a stacking direction on top of each other. Between each of the substacks are bipolar conductive substrates 2112, which extend the length of the electronic connection tabs of tabbed current bus 2118b and tabbed current bus 2118a. Surrounding the substacks 2102a-c are hard stops 2108a-c, which help to hold adjacent substacks together (e.g., substack 2102a and 2102b).

To prevent electrolyte of one substack 2102a-c from combining with the electrolyte of another substack 2102a-c, hard stops 2108a-c may be provided around the ends of adjacent substacks 2102a-c and the bipolar conductive substrate 2112 between adjacent substacks 2102a-c to substantially seal electrolyte within its particular substack 2102a-c.

For example, the hard stops 2108a-c may include sealing rings 2120 about a periphery of the hard stops 2108a-c to provide a sealing barrier between the substacks 2102a-c, which substantially prevent electrolyte from combining with the electrolyte of adjacent substacks 2102a-c. The sealing rings 2120 create a seal between the walls of the ESD casing and the hard stop 2108a-c. The hard stops 2108a-c may include hard stop holders 2130 which secure the hard stops 2108a-c to the bipolar conductive substrate 2112 and to the electronic current tabs 2118a-b. The hard stop holders 2130 may be bolted or riveted across the hard stop holders 2130 of the hard stop 2108a-c pinching the sides of the hard stops 2108a-c together, securing the hard stops 2108a-c to the bipolar conductive substrate 2112 and to the electronic current tabs 2118a-b.

In certain implementations, the conductivity between the substacks 2102a-c through the bipolar conductive substrate 2112 may be enhanced by connecting the substacks 2102a-c through the bipolar conductive substrate 2112. The electronic connection tabs 2118a of a substack 2102a having a first polarity may be directly electrically linked to the electronic connection tabs 2118b of an adjacent substack 2102b having a different polarity. The direct electronic link may be achieved using welds, bolts, screws, rivets, or any other means of electrically linking the electronic connection tabs (e.g., 2118a and 2118b) of the adjacent substacks (e.g., 2102a and 2102b). The electronic link provides a parallel path for electrons between the two electronic connection tabs 2118a-b and is similar to the direct electrical link of a bipolar battery configuration, since the MPUs of one polarity are linked to the MPUs of the opposite polarity through the bipolar conductive substrate 2112.

In certain implementations, the hard stops 2108a-c may include a first section and second section 2140a-b which combine together to secure hard stops 2108a-c to the bipolar conductive substrate 2112 and to the electronic current tabs 2118a-b. The hard stop 2108a-c may include a notched shelf 2146 in the shape of the electronic connection tab 2118a-b to which they are configured to interface, which when placed over the electronic connection tab 2118a-b surrounds the electronic connection tab 2118a-b. The notch 2146 may be on the sides of the hard stop that face the electronic connection tabs 2118a-b. For example, substack 2102a and substack 2102b have electronic connection tabs 2118a-b between the first and second 2140a-b hard stop sections. A notched shelf 2146, in the shape of the electronic connection tabs 2118a-b, on the first and second hard stop sections 2140a-b complements and surrounds the electronic connection tabs 2118a-b. However, on the sides without electronic connection tabs 2118a-b, the hard stop sections 2140a-b have a notched shelf 2148 with thickness substantially equal to the bipolar conductive substrate 2112. On the bottom end of substack 2102c, the first hard stop section 2140a has a notched shelf 2150a that complements and surrounds the electronic connection tab 2118a protruding from the bottom end of substack 2102c. The second hard stop section 2140b has a notched shelf 2150b that complements the bipolar conductive substrate 2112. Hard stop holders 2130 may be riveted or bolted to secure the hard stops 2108a-c to the electronic connection tabs 2118a-b and the bipolar conductive substrates 2112.

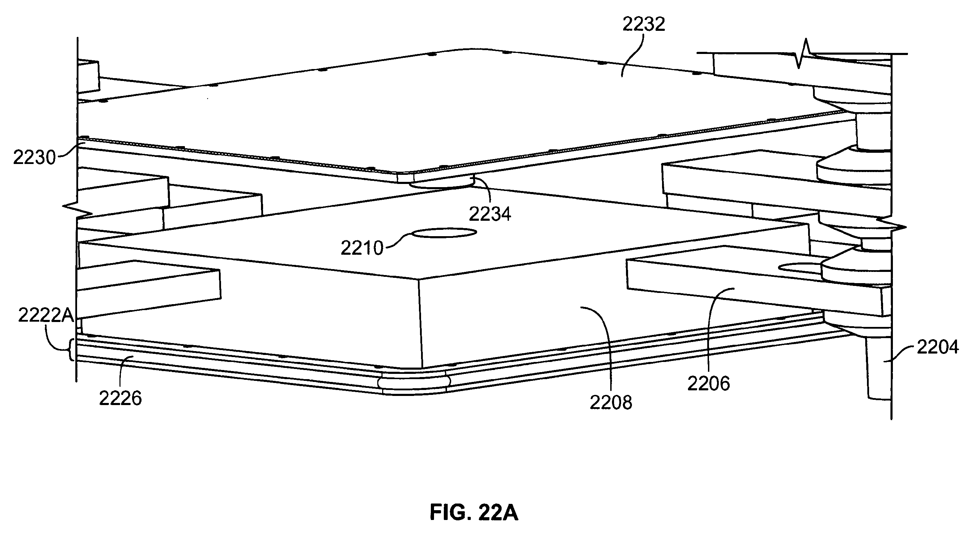

FIGS. 22A-H show illustrative representations for assembling an ESD 2202 having a plurality of substacks 2220, in accordance with some implementations of the disclosure. FIG. 22A shows an assembly jig 2204 that is used to align and hold the different sections of the ESD 2202 together while assembling the ESD 2202. The assembly jig 2204 has locking clamps 2206 that hold and lock the components together during assembly. A bottom hard stop section 2220 is first placed around the assembly jig platform 2208. The hard stop sections 2222 have sealing rings 2226 attached to the outer rims of the hard stop sections 2222. A bonded bottom collector-plate 2230 is then placed onto the assembly jig platform 2208. The bonded bottom collector-plate 2230 may include a conductive substrate 2232 on the top face of the collector-plate 2230. The bonded bottom collector-plate 2230 includes a boss 2234b protruding from the bottom of the bottom collector-plate 2230.
The boss 2234b is placed into a groove 2210, which fits the boss 2234b and holds the bottom collector-plate 2230 in place. The bottom collector-plate 2230 is locked into place with the locking clamps 2206.

In certain implementations, a gasket, which helps prevent leakage of electrolyte, may be placed on the outer edge of the conductive substrate 2232. Glue may be placed on the outer edge of the conductive substrate 2232 in order to help bond the conductive substrate 2232 with a component placed on the top face of the conductive substrate 2232.

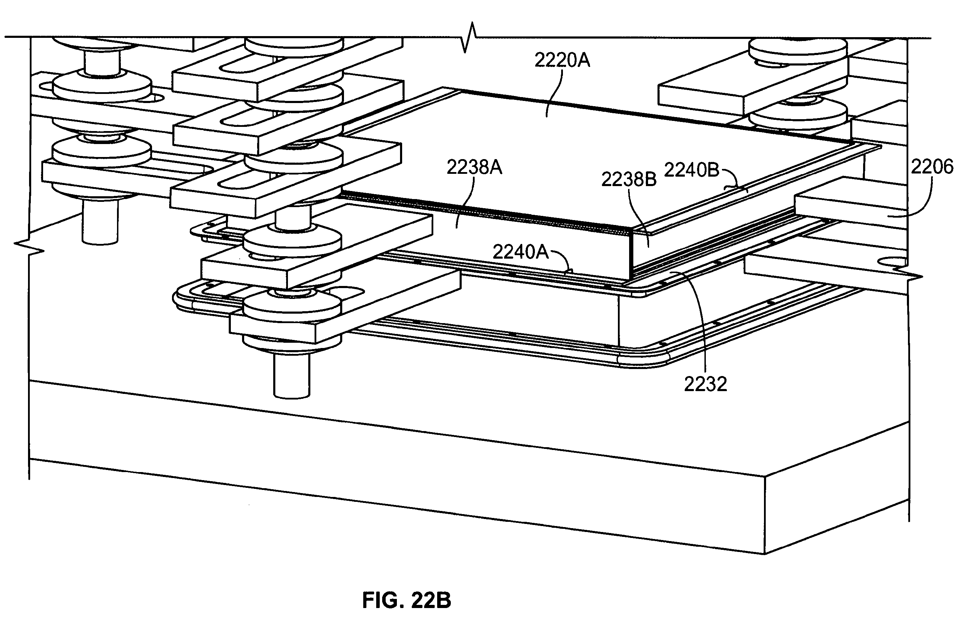

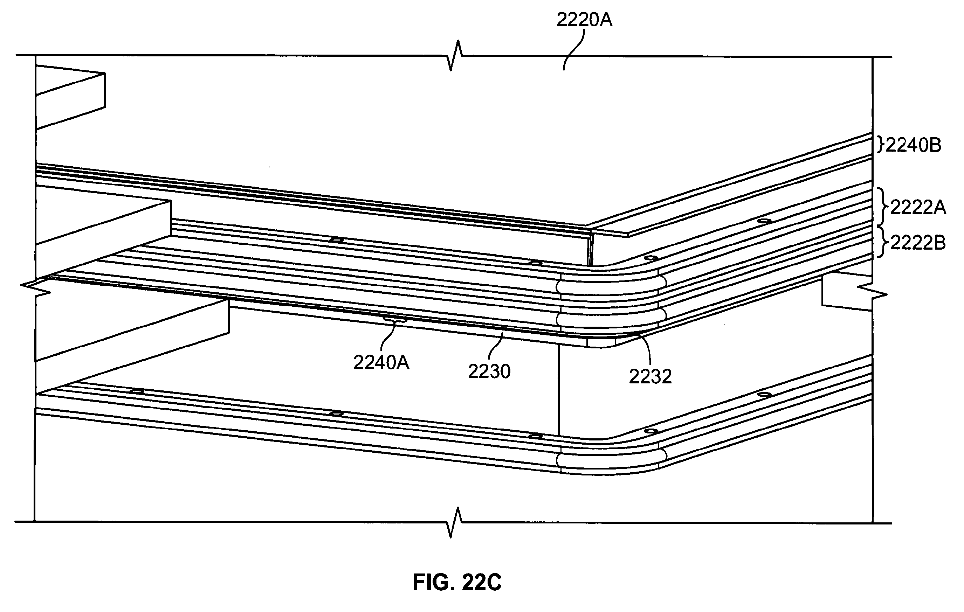

FIG. 22B shows a first substack 2220a placed on top of the conductive substrate 2232 of the bottom collector-plate 2230. The first substack 2220a is locked into place and aligned using the locking clamps 2206. The first substack 2220a is attached to the conductive substrate 2232 by welding, riveting, or bolting the electronic connection tabs 2240a of the tabbed current bus 2238a that are on the bottom face of the first substack 2220a. In FIG. 22C, after the first substack 2220a is attached to the conductive substrate 2232 of the bottom collector-plate 2230, a top hard stop section 2222b, which attaches to the electronic connection tabs 2240a at the bottom of the first substack 2220a and the conductive substrate of 2232 the bottom collector-plate 2230, is placed around the first substack 2220a. Afterward a bottom hard stop section 2222a is placed over the top hard stop section 2222. The bottom hard stop 2222b section attaches to the electronic connection tabs 2240b on the top face of the first substack 2220a.

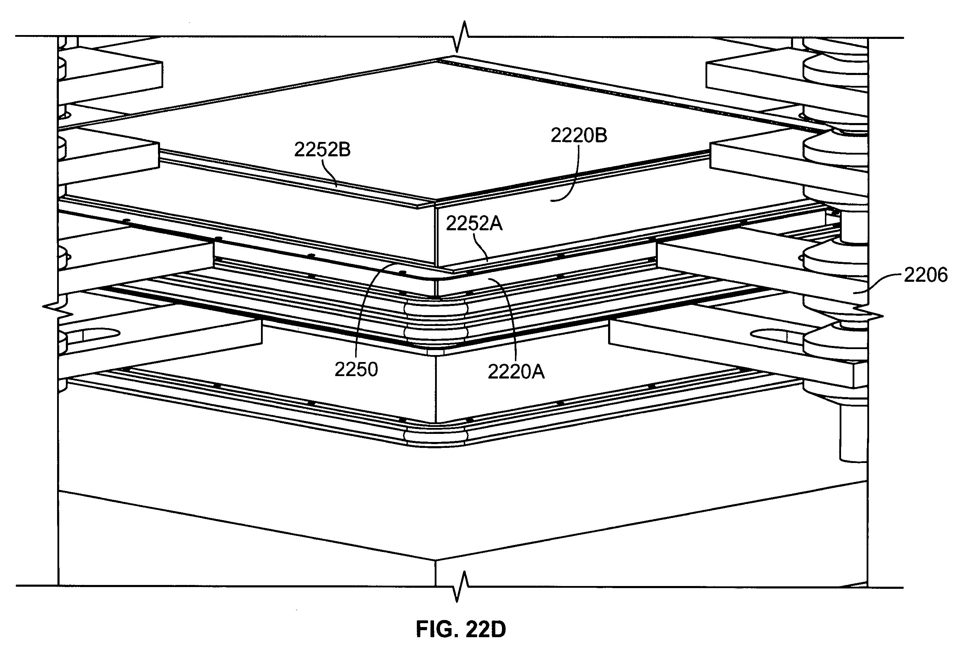

FIG. 22D shows a bipolar conductive substrate 2250 placed on top of the first substack 2220a. The bipolar conductive substrate 2250 is locked into place and aligned to the first substack 2220a using the locking clamps 2206. A second substack 2220b is placed on top of the bipolar conductive substrate 2250. The second substack 2220b is placed such that the electronic connection tabs 2252a on the bottom face of the second substack 2220b align with the electronic connection tabs 2240b on the top face of the first substack 2220a. For example, the second substack 2220b is rotated 90-degrees with respect to the first substack 2220a. The electronic connection tabs 2252a on the bottom face of the second substack 2220b and the electronic connection tabs 2240b on the top face of the first substack 2220a are fastened to the bipolar conductive substrate 2250 by welding, riveting, or bolting. The bottom electronic connection tabs 2252a of the second substack 2220b may be electronically connected to the top electronic connection tabs 2240b of the first substack 2220a by using welds, bolts, screws, rivets, or any other means of electrically linking the electronic connection tabs together. After the second substack 2220b is fastened to the bipolar conductive substrate 2250, a top hard stop section 2222b followed by a bottom hard stop 2222a section may be placed around the second substack 2220b (these hard stops are not shown in FIG. 22D). Additional substacks and conductive substrates may be stacked on top of each other in similar manners.

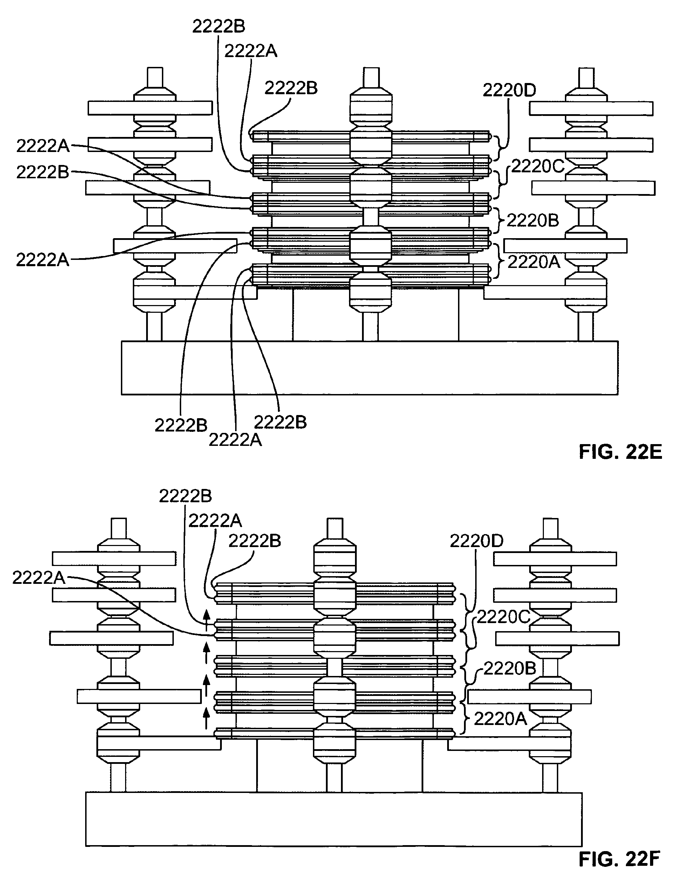

FIG. 22E shows four substacks 2220a-d stacked in a stacking direction. The hard stop sections 2222a-b have not been attached to the bipolar conductive substrates 2250. In FIG. 22F, the bottom hard stop sections 2222b around each substack 2220a-d is lifted up and attached to the bipolar conductive substrates 2250 on the bottom sides of the bipolar conductive substrates 2250. The top hard stop sections 2222a are also attached to the bipolar conductive substrates 2250. The hard stop sections 2222a-b may be attached to the bipolar conductive substrates 2250 by bolting or riveting across the top and bottom sections of the hard stops through the bipolar conductive substrates 2250. In certain implementations, the electronic connection tabs 2252a-b may extend to the edge of the bipolar conductive substrates 2250 and fastened to the bipolar conductive substrate 2250 with the hard stop sections 2222a-b. When the hard stop sections 2222a-b are fastened, the electronic connection tabs 2252a and 2240b which are aligned together adjacent to a bipolar conductive substrate 2250 may be electronically linked together using welds, bolts, screws, rivets, or any other means of electrically linking the electronic connection tabs 2252a and 2240b.

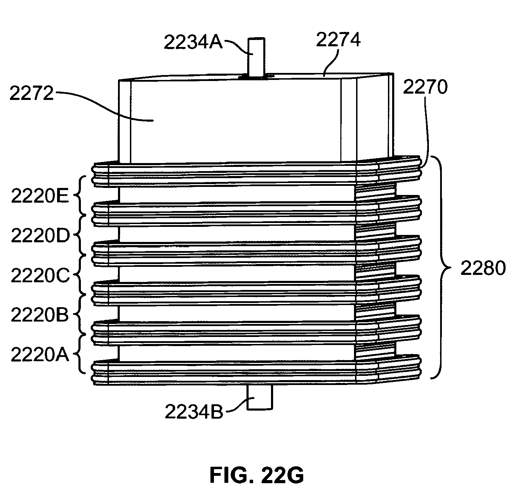

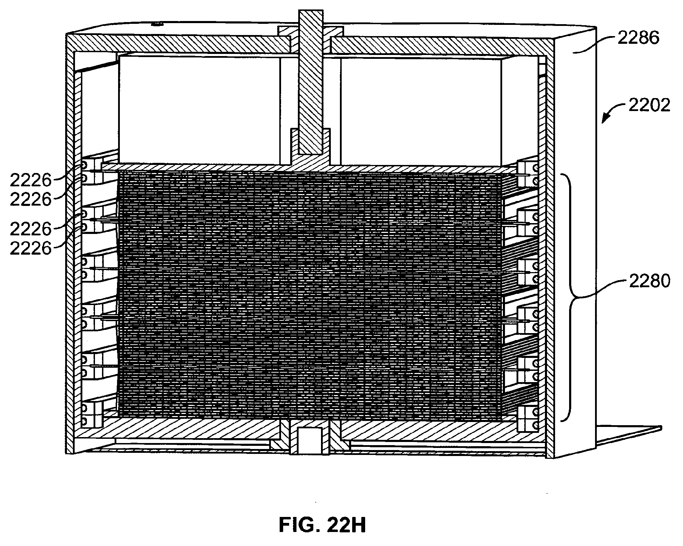

FIG. 22G shows multiple substacks 2220a-e, which form a stack 2280, stacked in a stacking direction with a top collector plate 2270 attached to the top face of the top substack 2220e and a bottom collector plate 2230 attached to the bottom face of the bottom substack 2220a. Bosses 2234a-b protrude outward perpendicular to the collector-plates 2270 and 2230.
A compression plate 2274 may be attached to the top collector-plate 2270 surrounding the boss 2234a. An internal spring 2272 may also be attached to the top collector-plate. FIG. 22H shows a cross section view of the stack 2280 placed into an ESD casing 2286. The sealing rings 2226 on the outer rims of the hard stops 2222a-b create a seal between the walls of the ESD casing 2286 and the hard stops 2222a-b, containing the electrolyte of a substack 2220a-e within itself. This prevents electrolyte of adjacent substacks 2220a-e from combining together.

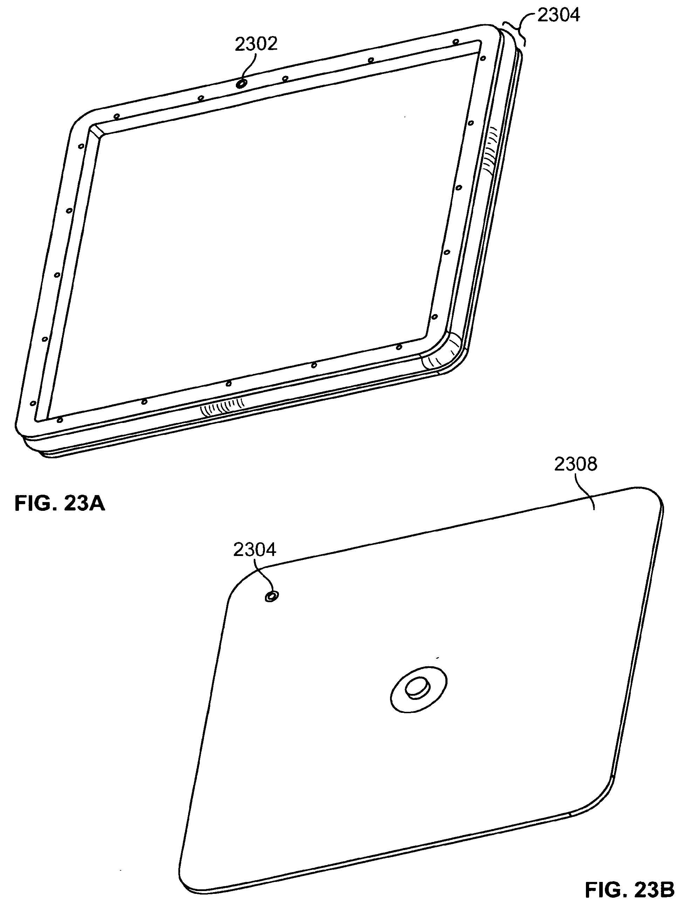

FIGS. 23A-B shows equalization valves 2302 and pressure relief valves 2304, in accordance with some implementations of the disclosure. Sealing the substacks, for example, to prevent electrolyte of a first substack from combining with the electrolyte of another substack, may produce a pressure differential between adjacent substacks as the substacks are charged and discharged. As shown in FIG. 23A, equalization valves 2302 may be provided on the hard stops to decrease the pressure differences thus arising. Equalization valves 2302 may operate as a semipermeable membrane to chemically allow the transfer of a gas and to substantially prevent the transfer of electrolyte.

As shown in FIG. 23B, provided at the top of the ESD casing 2308 may be a pressure relief valve 2304, which is set to vent at a lower pressure than the ESD casing 2308 deformation pressure. Thus, when the pressure within the ESD 2308 becomes close to the container deformation limit, the pressure relief valve 2304 may release the excess pressure, ensuring that the ESD casing 2308 does not deform.

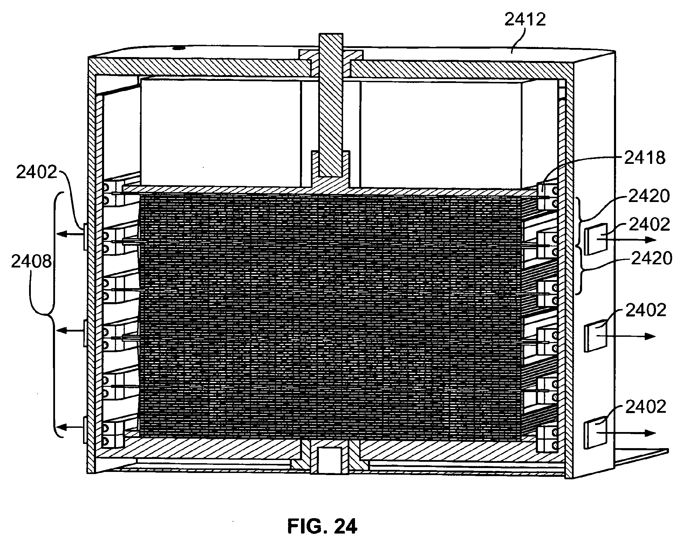

FIG. 24 shows illustrative thermoelectric generators 2402 for cooling the ESD, in accordance with some implementations of the disclosure. The ESD casing 2412 is typically made of metal. Because the hard stops 2418 and electrolyte of each substack 2420 interface with the walls of the ESD casing 2412, heat may be transferred to the metal ESD casing 2412. Thermoelectric generators 2402 may be placed on the outsides of the casing 2412 to cool the ESD casing 2412 and thereby the substacks 2420 within the ESD. Thermoelectric generators transfer heat from one side of the generator to the other. Heat which builds up on the ESD casing coupled to one side of the thermoelectric generator is transferred to the other side of the thermoelectric generator. Either through convection or other cooling means, the side of the thermoelectric generator not coupled to the ESD casing is then cooled. This process in effect cools the ESD casing. Though thermoelectric generators are shown, any mechanism which transfers heat away from the ESD casing may be used.

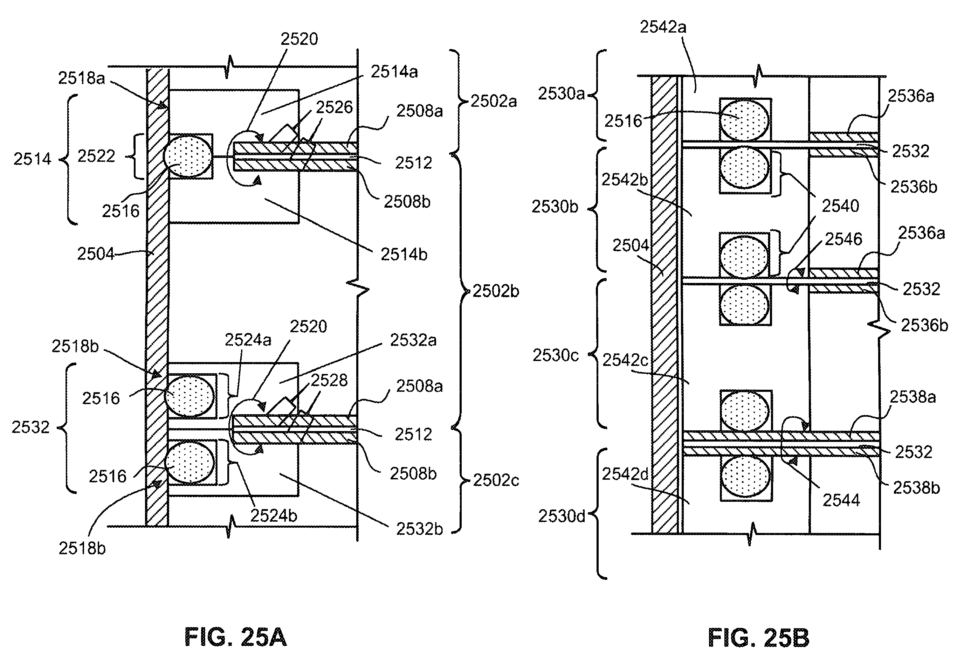

FIGS. 25A-B show schematic cross-sectional views of hard stops 2514, 2532, and 2542a-d, in accordance with some implementations of the disclosure. The hard stops may have various sealing configurations. For example, the hard stops of FIG. 25A are configured to form a seal with an outer casing of the ESD, and the hard stops of FIG. 25B are configured to form a seal between the bipolar conductive substrate and/or connection tabs of adjacent substacks.

FIG. 25A shows hard stops 2514 and 2532 that interface with bipolar conductive substrate 2512 and electronic connection tabs 2508a-b. As discussed above, hard stops may be provided between adjacent substacks (e.g., adjacent substacks 2502a and 2502b) and may encircle the bipolar conductive substrate 2512 located between the two adjacent substacks. Hard stop 2514 includes a first section 2514a and a second section 2514b. The first and second sections 2514a-b have notches 2526 shaped to receive the electronic connection tabs 2508a-b and the bipolar conductive substrate 2512. The first and second sections 2514a-b may provide a force 2520 that compresses the electronic connection tabs 2508a-b and the bipolar conductive substrate 2512 to one another and secures the hard stop 2514 thereabout. The outer rim 2518a of the respective hard stop sections 2514a-b are reciprocally grooved 2522 for receiving a sealing ring 2516 that is positioned between the first and second sections 2514a-b of the hard stop 2514. In certain embodiments, each of the first and second sections may include a respective groove. For example, first and second sections 2532a-b of hard stop 2532 include respective grooves 2524a-b on their respective outer rims 2518b for receiving a sealing ring 2516. The sealing rings 2516 provided about the periphery of the hard stops 2514 and 2532 create a seal between the walls 2504 of an ESD casing and the hard stops 2514 and 2532, thereby preventing electrolyte from traveling between adjacent substacks 2502a-c. The first and second sections 2532a-b of the hard stop 2532 similarly have notches 2528 shaped to receive the electronic connection tabs 2508a-b and the bipolar conductive substrate 2512.

FIG. 25B shows hard stops 2542a-d that interface with bipolar conductive substrate 2532 and electronic connection tabs 2536a-b and 2538a-b. The hard stops 2542a-d are provided around the entirety of a substack rather than only a portion thereof (e.g., the respective heights of the hard stops 2542a-d are substantially equal to those of the substack 2530a-d surrounded thereby). For example, hard stop 2542b surrounds substack 2530b and extends between the bipolar conductive substrates 2532 of adjacent substacks 2530a and 2530c. Each hard stop 2542a-d includes interior grooves 2540 on opposite sides thereof for receiving a sealing ring 2516 that is fitted between the hard stop 2542a-d and the bipolar conductive substrates 2532 and/or the electronic connection tabs 2536a-b. In certain embodiments, the bipolar conductive substrate extends outwardly farther than the electronic connection tabs. For example, bipolar connective substrate 2532 extends farther than electronic connection tabs 2536a-b, and therefore the sealing rings 2516 interface with the bipolar conductive substrate 2532 to prevent electrolyte from traveling between adjacent substacks. In certain embodiments, the electronic connection tabs may extend substantially the same distance as the bipolar conductive substrate. For example, electronic connection tabs 2538a-b extend the same distance as the bipolar conductive substrate 2532, and therefore the sealing rings form interface with the electronic connection tabs 2538a-b to prevent electrolyte from traveling between adjacent substacks.

The substrates used to form the conductive substrates may be formed of any suitable conductive and impermeable or substantially impermeable material, including, but not limited to, a non-perforated metal foil, aluminum foil, stainless steel foil, cladding material including nickel and aluminum, cladding material including copper and aluminum, nickel plated steel, nickel plated copper, nickel plated aluminum, gold, silver, any other suitable material, or combinations thereof, for example. Each substrate may be made of two or more sheets of metal foils adhered to one another, in certain embodiments.

The positive electrode layers of the disclosure may be formed of any suitable active material, including, but not limited to, nickel hydroxide (Ni(OH)₂), zinc (Zn), any other suitable material, or combinations thereof, for example. The positive active material may be sintered and impregnated, coated with an aqueous binder and pressed, coated with an organic binder and pressed, or contained by any other suitable technique for containing the positive active material with other supporting chemicals in a conductive matrix. The positive electrode layer of the MPU may have particles, including, but not limited to, metal hydride (MH), palladium (Pd), silver (Ag), any other suitable material, or combinations thereof, infused in its matrix to reduce swelling, for example. This may increase cycle life, improve recombination, and reduce pressure within the cell segment, for example. These particles, such as MH, may also be in a bonding of the active material paste, such as Ni(OH)₂, to improve the electrical conductivity within the electrode and to support recombination.

The negative electrode layers of the disclosure may be formed of any suitable active material, including, but not limited to, MH, Cd, Mn, Ag, any other suitable material, or combinations thereof, for example. The negative active material may be sintered, coated with an aqueous binder and pressed, coated with an organic binder and pressed, or contained by any other suitable technique for containing the negative active material with other supporting chemicals in a conductive matrix, for example. The negative electrode side may have chemicals including, but not limited to, Ni, Zn, Al, any other suitable material, or combinations thereof, infused within the negative electrode material matrix to stabilize the structure, reduce oxidation, and extend cycle life, for example.

Various suitable binders, including, but not limited to, organic carboxymethylcellulose (CMC) binder, Creyton rubber, PTFE (Teflon), any other suitable material, or combinations thereof, for example, may be mixed with the active material layers to hold the layers to their substrates. Ultra-still binders, such as 200 ppi metal foam, may also be used with the stacked ESD constructions of the disclosure.

The separator of each electrolyte layer of the ESD of the disclosure may be formed of any suitable material that electrically isolates its two adjacent MPUs while allowing ionic transfer between those MPUs. The separator may contain cellulose super absorbers to improve filling and act as an electrolyte reservoir to increase cycle life, wherein the separator may be made of a polyabsorb diaper material, for example. The separator may, thereby, release previously absorbed electrolyte when charge is applied to the ESD. In certain embodiments, the separator may be of a lower density and thicker than normal cells so that the inter-electrode spacing (IES) may start higher than normal and be continually reduced to maintain the capacity (or C-rate) of the ESD over its life as well as to extend the life of the ESD.

The separator may be a relatively thin material bonded to the surface of the active material on the MPUs to reduce shorting and improve recombination. This separator material may be sprayed on, coated on, pressed on, or combinations thereof, for example. The separator may have a recombination agent attached thereto, in certain embodiments. This agent may be infused within the structure of the separator (e.g., this may be done by physically trapping the agent in a wet process using a polyvinyl alcohol (PVA or PVOH) to bind the agent to the separator fibers, or the agent may be put therein by electro-deposition), or it may be layered on the surface by vapor deposition, for example. The separator may be made of any suitable material or agent that effectively supports recombination, including, but not limited to, Pb, Ag, any other suitable material, or combinations thereof, for example. While the separator may present a resistance if the substrates of a cell move toward each other, a separator may not be provided in certain embodiments of the disclosure that may utilize substrates stiff enough not to deflect.

The electrolyte of each electrolyte layer of the ESD of the disclosure may be formed of any suitable chemical compound that may ionize when dissolved or molten to produce an electrically conductive medium. The electrolyte may be a standard electrolyte of any suitable chemical, including, but not limited to, NiMH, for example. The electrolyte may contain additional chemicals, including, but not limited to, lithium hydroxide (LiOH), sodium hydroxide (NaOH), calcium hydroxide (CaOH), potassium hydroxide (KOH), any other suitable material, or combinations thereof, for example. The electrolyte may also contain additives to improve recombination, including, but not limited to, Ag(OH)₂, for example. The electrolyte may also contain rubidium hydroxide (RbOH), for example, to improve low temperature performance. In some embodiments of the disclosure, the electrolyte may be frozen within the separator and then thawed after the ESD is completely assembled. This may allow for particularly viscous electrolytes to be inserted into the electrode unit stack of the ESD before the gaskets have formed substantially fluid tight seals with the electrode units adjacent thereto.

The sealing rings of the ESD of the disclosure may be formed of any suitable material or combination of materials that may effectively seal an electrolyte within the space defined by the hard stop, the sealing ring and the MPUs adjacent thereto. In certain embodiments, the sealing ring may be formed from a solid seal barrier or loop, or multiple loop portions capable of forming a solid seal loop that may be made of any suitable nonconductive material, including, but not limited to, nylon, polypropylene, cell gard, rubber, PVOH, any other suitable material, or combinations thereof, for example.

Alternatively, or additionally, the sealing ring may be formed from any suitable viscous material or paste, including, but not limited to, epoxy, brea tar, electrolyte (e.g., KOH) impervious glue, compressible adhesives (e.g., two-part polymers, such as Loctite® brand adhesives made available by the Henkel Corporation, that may be formed from silicon, acrylic, and/or fiber reinforced plastics (FRPs) and that may be impervious to electrolytes), any other suitable material, or combinations thereof, for example. In some embodiments, a sealing ring may be formed by a combination of a solid seal loop and a viscous material, such that the viscous material may improve sealing between the solid seal loop and the walls of the ESD casing.

A benefit of utilizing ESDs designed with sealed substacks in a stacked formation may be an increased discharge rate of the ESD. This increased discharge rate may allow for the use of certain less-corrosive electrolytes (e.g., by removing or reducing the whetting, conductivity enhancing, and/or chemically reactive component or components of the electrolyte) that otherwise might not be feasible in prismatic or wound ESD designs. This leeway that may be provided by the stacked ESD design to use less corrosive electrolytes may allow for certain epoxies (e.g., J-B Weld epoxy) to be utilized when forming a seal with sealing rings that may otherwise be corroded by more corrosive electrolytes.

The hard stops of the ESD of the disclosure may be formed of any suitable material including, but not limited to, various polymers (e.g., polyethylene, polypropylene), ceramics (e.g., alumina, silica), any other suitable mechanically durable and/or chemically inert material, or combinations thereof. The hard stop material or materials may be selected, for example, to withstand various ESD chemistries that may be used.

The ESD of the disclosure may include a plurality of substacks stacked in a stacking direction formed by multiple MPUs. In accordance with an embodiment of the present disclosure, the thicknesses and materials of each one of the bipolar conductive substrates, the electrode layers, the electrolyte layers, and the hard stops may differ from one another, not only from substack to substack, but also within a particular substack. This variation of geometries and chemistries, not only at the stack level, but also at the individual substack level, may create ESDs with various benefits and performance characteristics.

Additionally, the materials and geometries of the substrates, electrode layers, electrolyte layers, and hard stops may vary along the height of the stack from substack to substack. The electrolyte used in each of the electrolyte layers of the ESD may vary based upon how close its respective substack is to the middle of the stack of cell segments. For example, innermost substacks may include an electrolyte layer that is formed of a first electrolyte, while middle substacks may include electrolyte layers that are each formed of a second electrolyte, while outermost substack may include electrolyte layers that are each formed of a third electrolyte. By using higher conductivity electrolytes in the internal stacks, the resistance may be lower such that the heat generated may be less. This may provide thermal control to the ESD by design instead of by external cooling techniques.

As another example, the active materials used as electrode layers in each of the substacks of ESD may also vary based upon how close its respective substack is to the middle of the stack of substacks. For example, innermost substack may include electrode layers formed of a first type of active materials having a first temperature and/or rate performance, while middle substacks may include electrode layers formed of a second type of active materials having a second temperature and/or rate performance, while outermost substacks may include electrode layers formed of a third type of active materials having a third temperature and/or rate performance. As an example, an ESD stack may be thermally managed by constructing the innermost substacks with electrodes layers of nickel cadmium, which may better absorb heat, while the outermost cell segments may be provided with electrode layers of nickel metal hydride, which may need to be cooler, for example. Alternatively, the chemistries or geometries of the ESD may be asymmetric, where the substacks at one end of the stack may be made of a first active material and a first height, while the substacks at the other end of the stack may be of a second active material and a second height.

Moreover, the geometries of each of the substacks of the ESD may also vary along the stack of substacks. Besides varying the distance between active materials within a particular substack, certain substacks may have a first distance between the active materials of those substacks, while other substacks may have a second distance between the active materials of those substacks. In any event, the substacks or portions thereof having smaller distances between active material electrode layers may have higher power, for example, while the substacks or portions thereof having larger distances between active material electrode layers may have more room for dendrite growth, longer cycle life, and/or more electrolyte reserve, for example. These portions with larger distances between active material electrode layers may regulate the charge acceptance of the ESD to ensure that the portions with smaller distances between active material electrode layers may charge first, for example.

Although the above described and illustrated implementations of the stacked ESD show an ESD formed by stacking MPUs and conductive substrates having substantially round cross-sections into a cylindrical ESD or rectangular cross-sections into a rectangular ESD, it should be noted that any of a wide variety of shapes may be utilized to form the substrates of the stacked ESD. For example, the stacked ESD of the present disclosure may be formed by stacking MPUs and conductive substrates with cross-sectional areas that are rectangular, triangular, hexagonal, or any other desired shape or combination thereof. Also, implementations described with respect to the cylindrical ESD may also be implemented on the rectangular ESD, and vice versa. For example, the fill port tube and pressure relief valve of the cylindrical ESD described in FIG. 14 and FIG. 15 may be implemented in a rectangular ESD. Furthermore, the bipolar conductive substrates described with respect to FIG. 2A-D, and the techniques for electronically coupling the conductive flanges with respect to FIG. 8A-C, may be implemented on the conductive flanges and conductive substrates of any shape (e.g., rectangular or circular).

It will be understood that the foregoing is only illustrative of the principles of the disclosure, and that various modifications may be made by those skilled in the art without departing from the scope and spirit of the disclosure. It will also be understood that various directional and orientational terms such as "horizontal" and "vertical," "top" and "bottom" and "face" and "side," "length" and "width" and "height" and "thickness," "inner" and "outer," "internal" and "external," and the like are used herein only for convenience, and that no fixed or absolute directional or orientational limitations are intended by the use of these words. For example, the devices of this disclosure, as well as their individual components, may have any desired orientation. If reoriented, different directional or orientational terms may need to be used in their description, but that will not alter their fundamental nature as within the scope of this disclosure. Those skilled in the art will appreciate that the disclosure may be practiced by other than the described embodiments, which are presented for purposes of illustration rather than of limitation, and the disclosure is limited only by the claims that follow.

## Claims

1. An energy storage device comprising:
a bipolar conductive substrate (908) having a first side coupled to a first ubstack (902a) and a second side coupled to a second substack (902b)
the first and second substacks comprising:
a plurality of alternately stacked positive and negative monopolar electrode units, each respective monopolar electrode unit comprising a first active material electrode layer and a second active material electrode layer on opposing sides of a conductive pathway; and
a separator (524) provided between adjacent monopolar electrode units,
wherein conductive pathways of the positive monopolar electrode units are electronically coupled to form a positive tabbed current bus (930), and conductive pathways of the negative monopolar electrode units are electronically coupled to form a negative tabbed current bus (936); and
wherein the negative tabbed current bus (936) of the first substack is coupled to the first side of the bipolar conductive substrate (908) and the positive tabbed current bus (930) of the second substack is coupled to the second side of the bipolar conductive substrate.

2. The energy storage device of claim 1, wherein the conductive pathway (202 a-d) comprises perforations (208 a-b).

3. The energy storage device of claim 2, wherein the perforations are uniformly spaced apart from one another, or wherein the perforations are uniformly sized.

4. The energy storage device of claim 2, wherein the first and second active material electrode layers physically bind to one another through the perforations in the conductive pathway.

5. The energy storage device of claim 2, wherein the surface area of the conductive pathway is equal to the area defined by the perforations.

6. The energy storage device of claim 1, wherein the first and second active material electrode layers comprise metal foam having a respective active material deposited therein, or
wherein the first and second active material electrode layers comprise a respective active material bound to the conductive pathway using a binder.

7. The energy storage device of claim 1, wherein the conductive pathway comprises a plurality of conductive flanges.

8. The energy storage device of claim 7, wherein the positive tabbed current bus comprises the plurality of conductive flanges of the positive monopolar electrode units, and the negative tabbed current bus comprises the plurality of conductive flanges of the negative monopolar electrode units.

9. The energy storage device of claim 7, wherein the conductive flanges are folded to form the respective positive and negative tabbed current buses.

10. The energy storage device of claim 9, wherein the folded tabs are aligned in a stacking direction, optionally wherein the tabbed current buses are parallel to the stacking direction.

11. The energy storage device of claim 9, wherein the positive and negative tabbed current buses comprise electronic connection tabs that protrude outwardly from the stacking direction at an end of the respective tabbed current bus.

12. The energy storage device of claim 11, wherein electronic connection tabs of the first substack align with electronic connection tabs of the second substack about the bipolar conductive substrate, and wherein the electronic connection tabs of the first and second substacks are electronically coupled to the bipolar conductive substrate and to one another, or
wherein the electronic connection tabs protrude parallel to the bipolar conductive substrate, or
wherein the electronic connection tabs extend across a side of the substack and perpendicular to the stacking direction.

13. The energy storage device of claim 11, wherein the first and second sides of the bipolar conductive substrate extend outwardly from the first and second substacks to form an outwardly extended portion, and the electronic connection tabs of the first and second substacks are coupled to the outwardly extended portion of the bipolar conductive substrate.

14. The energy storage device of claim 13, further comprising a hard stop that encircles the bipolar conductive substrate and couples the bipolar conductive substrate to the electronic connection tabs of the first and second substacks about the outwardly extended portion.

15. The energy storage device of claim 14, wherein the hard stop comprises a peripheral groove in an outer rim of the hard stop for receiving a sealing ring, wherein the sealing ring prevents an electrolyte from the first substack from combining with an electrolyte from the second substack, or
wherein the hard stop comprises a plurality of notches that align the electronic connection tabs of the first and second substacks to orient the electronic connection tabs with one another with respect to the bipolar conductive substrate.

## Patentansprüche

1. Energiespeichervorrichtung, die aufweist:
ein bipolares leitfähiges Substrat (908), das eine erste Seite, die mit einem ersten Teilstapel (902a) gekoppelt ist, und eine zweite Seite aufweist, die mit einem zweite Teilstapel (902b) gekoppelt ist;
wobei der erste und zweite Teilstapel aufweisen:
mehrere abwechselnd gestapelte positive und negative monopolare Elektrodeneinheiten, wobei jede jeweilige monopolare Elektrodeneinheit eine erste Elektrodenschicht aus aktivem Material und eine zweite Elektrodenschicht aus aktivem Material auf gegenüberliegenden Seiten einer leitfähigen Bahn aufweist; und
einen Separator (524), der zwischen benachbarten monopolaren Elektrodeneinheiten vorgesehen ist,
wobei leitfähige Bahnen der positiven monopolaren Elektrodeneinheiten elektronisch gekoppelt sind, um eine positive mit Zungen versehene Stromsammelschiene (930) zu bilden, und leitfähige Bahnen der negativen monopolaren Elektrodeneinheiten elektronisch gekoppelt sind, um eine negative mit Zungen versehene Stromsammelschiene (936) zu bilden; und
wobei die negative mit Zungen versehene Stromsammelschiene (936) des ersten Teilstapels mit der ersten Seite des bipolaren leitfähigen Substrats (908) gekoppelt ist und die positive mit Zungen versehene Stromsammelschiene (930) des zweiten Teilstapels mit der zweiten Seite des bipolaren leitfähigen Substrats gekoppelt ist.

2. Energiespeichervorrichtung nach Anspruch 1, wobei die leitfähige Bahn (202a-d) Perforationen (208a-b) aufweist.

3. Energiespeichervorrichtung nach Anspruch 2, wobei die Perforationen gleichmäßig voneinander beabstandet sind, oder wobei die Perforationen gleichmäßig bemessen sind.

4. Energiespeichervorrichtung nach Anspruch 2, wobei die erste und zweite Elektrodenschicht aus aktivem Material durch die Perforationen in der leitfähigen Bahn physisch aneinander gebunden sind.

5. Energiespeichervorrichtung nach Anspruch 2, wobei der Oberflächenbereich der leitfähigen Bahn gleich dem Bereich ist, der durch die Perforationen definiert ist.

6. Energiespeichervorrichtung nach Anspruch 1, wobei die erste und zweite Elektrodenschicht aus aktivem Material einen Metallschaum aufweist, der ein jeweiliges darin abgeschiedenes aktives Material aufweist, oder
wobei die erste und zweite Elektrodenschicht aus aktivem Material ein jeweiliges aktives Material aufweist, das an die leitfähige Bahn mittels eines Bindemittels gebunden ist.

7. Energiespeichervorrichtung nach Anspruch 1, wobei die leitfähige Bahn mehrere leitfähige Flansche aufweist.

8. Energiespeichervorrichtung nach Anspruch 7, wobei die positive mit Zungen versehene Stromsammelschiene die mehreren leitfähigen Flansche der positiven monopolaren Elektrodeneinheiten aufweist, und die negative mit Zungen versehene Stromsammelschiene die mehreren leitfähigen Flansche der negativen monopolaren Elektrodeneinheiten aufweist.

9. Energiespeichervorrichtung nach Anspruch 7, wobei die leitfähigen Flansche gefaltet sind, um die jeweiligen positiven und negativen mit Zungen versehenen Stromsammelschienen zu bilden.

10. Energiespeichervorrichtung nach Anspruch 9, wobei die gefalteten Zungen in eine Stapelrichtung ausgerichtet sind, wobei die mit Zungen versehenen Stromsammelschienen optional parallel zur Stapelrichtung sind.

11. Energiespeichervorrichtung nach Anspruch 9, wobei die positiven und negativen mit Zungen versehenen Stromsammelschienen elektronische Anschlusszungen aufweisen, die nach außen aus der Stapelrichtung an einem Ende der jeweiligen mit Zungen versehenen Stromsammelschiene vorstehen.

12. Energiespeichervorrichtung nach Anspruch 11, wobei elektronische Anschlusszungen des ersten Teilstapels mit elektronischen Anschlusszungen des zweite Teilstapels um das bipolare leitfähige Substrat ausgerichtet sind, und wobei die elektronischen Anschlusszungen des ersten und zweiten Teilstapels elektronisch mit dem bipolaren leitfähigen Substrat und miteinander gekoppelt sind, oder
wobei die elektronischen Anschlusszungen parallel zum bipolaren leitfähigen Substrat vorstehen, oder
wobei die elektronischen Anschlusszungen über eine Seite des Teilstapels und senkrecht zur Stapelrichtung vorstehen.

13. Energiespeichervorrichtung nach Anspruch 11, wobei die erste und zweite Seite des bipolaren leitfähigen Substrats aus dem ersten und zweiten Teilstapel nach außen vorstehen, um einen nach außen erweiterten Abschnitt zu bilden, und die elektronischen Anschlusszungen des ersten und zweiten Teilstapels mit dem nach außen erweiterten Abschnitt des bipolaren leitfähigen Substrats gekoppelt sind.

14. Energiespeichervorrichtung nach Anspruch 13, die ferner eine feste Sperre aufweist, die das bipolare leitfähige Substrat umgibt und das bipolare leitfähige Substrat mit den elektronischen Anschlusszungen des ersten und zweiten Teilstapels um den außen erweiterten Abschnitt koppelt.

15. Energiespeichervorrichtung nach Anspruch 14, wobei die feste Sperre eine Umfangsnut in einem Außenrand der festen Sperre zur Aufnahme eines Dichtungsrings aufweist, wobei der Dichtungsring verhindert, dass sich ein Elektrolyt aus dem ersten Teilstapel mit einem Elektrolyt aus dem zweiten Teilstapel vereinigt, oder
wobei die feste Sperre mehrere Kerben aufweist, die die elektronischen Anschlusszungen des ersten und zweiten Teilstapels so ausrichten, dass die elektronischen Anschlusszungen bezüglich des bipolaren leitfähigen Substrats miteinander ausgerichtet sind.

## Revendications

1. Dispositif de stockage d'énergie comprenant :
un substrat conducteur bipolaire (908) dont une première face est couplée à une première sous-pile (902a) et une deuxième face est couplée à une deuxième sous-pile (902b) ;
la première et la deuxième sous-piles comprenant :
une pluralité d'unités d'électrodes monopolaires positives et négatives empilées de manière alternée, chaque unité d'électrode monopolaire comprenant une première couche d'électrode en matériau actif et une deuxième couche d'électrode en matériau actif sur des côtés opposés d'un chemin conducteur ; et
un séparateur (524) prévu entre des unités d'électrodes monopolaires adjacentes, où des chemins conducteurs des unités d'électrodes monopolaires positives sont coupées électroniquement pour former un bus de courant positif à onglet (930), et des chemins conducteurs des unités d'électrodes monopolaires négatives sont coupées électroniquement pour former un bus de courant négatif à onglet (936) ; et
où le bus de courant négatif à onglet (936) de la première sous-pile est couplé à la première face du substrat conducteur bipolaire (908), et le bus de courant positif à onglet (930) de la deuxième sous-pile est couplé à la deuxième face du substrat conducteur bipolaire.

2. Dispositif de stockage d'énergie selon la revendication 1, où le chemin conducteur (202a-d) présente des perforations (208a-b).

3. Dispositif de stockage d'énergie selon la revendication 2, où les perforations sont régulièrement espacées l'une de l'autre, ou où les perforations sont de dimensions uniformes.

4. Dispositif de stockage d'énergie selon la revendication 2, où la première et la deuxième couches d'électrode en matériau actif sont physiquement liées l'une à l'autre par les perforations du chemin conducteur.

5. Dispositif de stockage d'énergie selon la revendication 2, où la surface du chemin conducteur est égale à la surface définie par les perforations.

6. Dispositif de stockage d'énergie selon la revendication 1, où la première et la deuxième couches d'électrode en matériau actif comprennent une mousse métallique contenant un matériau actif respectif déposé dans celles-ci, ou
où la première et la deuxième couches d'électrode en matériau actif comprennent un matériau actif respectif lié au chemin conducteur au moyen d'un agent de liaison.

7. Dispositif de stockage d'énergie selon la revendication 1, où le chemin conducteur comprend une pluralité de brides conductrices.

8. Dispositif de stockage d'énergie selon la revendication 7, où le bus de courant positif à onglet comprend la pluralité de brides conductrices des unités d'électrodes monopolaires positives, et où le bus de courant négatif à onglet comprend la pluralité de brides conductrices des unités d'électrodes monopolaires négatives.

9. Dispositif de stockage d'énergie selon la revendication 7, où les brides conductrices sont pliées pour former le bus de courant positif et le bus de courant négatif à onglet.

10. Dispositif de stockage d'énergie selon la revendication 9, où les onglets pliés sont alignées dans une direction d'empilement, les bus de courant à onglet étant facultativement parallèles à la direction d'empilement.

11. Dispositif de stockage d'énergie selon la revendication 9, où le bus de courant positif et le bus de courant négatif à onglet comportent des onglets de connexion électronique faisant saillie vers l'extérieur depuis la direction d'empilement à une extrémité du bus de courant à onglet respectif.

12. Dispositif de stockage d'énergie selon la revendication 11, où des onglets de connexion électronique de la première sous-pile sont alignés avec des onglets de connexion électronique de la deuxième sous-pile autour du substrat conducteur bipolaire, et où les onglets de connexion électronique de la première et de la deuxième sous-piles sont couplés électroniquement au substrat conducteur bipolaire et l'un à l'autre, ou
où les onglets de connexion électronique font saillie parallèlement au substrat conducteur bipolaire, ou
où les onglets de connexion électronique s'étendent au travers d'une face de la sous-pile et perpendiculairement à la direction d'empilement.

13. Dispositif de stockage d'énergie selon la revendication 11, où la première et la deuxième faces du substrat conducteur bipolaire s'étendent vers l'extérieur depuis la première et la deuxième sous-piles pour former une partie à extension extérieure, et où les onglets de connexion électronique de la première et de la deuxième sous-piles sont couplés à la partie à extension extérieure du substrat conducteur bipolaire.

14. Dispositif de stockage d'énergie selon la revendication 13, comprenant en outre une fin de course entourant le substrat conducteur bipolaire et couplant le substrat conducteur bipolaire aux onglets de connexion électronique de la première et de la deuxième sous-piles autour de la partie à extension extérieure.

15. Dispositif de stockage d'énergie selon la revendication 14, où la fin de course comprend une rainure périphérique sur un bord extérieur de ladite fin de course pour la réception d'une bague d'étanchéité, ladite bague d'étanchéité empêchant un électrolyte de la première sous-pile de se mélanger à un électrolyte de la deuxième sous-pile, ou
où la fin de course comprend une pluralité d'encoches alignant les onglets de connexion électronique de la première et de la deuxième sous-piles afin d'orienter les onglets de connexion électronique l'un sur l'autre par rapport au substrat conducteur bipolaire.
